(19) Europäisches Patentamt / European Patent Office / Office européen des brevets

(11) **EP 4 299 478 A1**

(12) **EUROPÄISCHE PATENTANMELDUNG**

(43) Veröffentlichungstag:
03.01.2024 Patentblatt 2024/01

(21) Anmeldenummer: 23182127.3

(22) Anmeldetag: 28.06.2023

(51) Internationale Patentklassifikation (IPC):
**B65G 13/10** (2006.01) **B65G 43/00** (2006.01)
**B65G 43/08** (2006.01) B65G 47/22 (2006.01)
B65G 47/244 (2006.01) B65G 47/28 (2006.01)
B65G 47/54 (2006.01) B65G 47/61 (2006.01)

(52) Gemeinsame Patentklassifikation (CPC):
**B65G 13/10; B65G 43/00; B65G 43/08;**
B65G 47/22; B65G 47/244; B65G 47/28;
B65G 47/54; B65G 47/61; B65G 2203/046

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: 29.06.2022 CH 7882022
02.09.2022 CH 10302022
13.03.2023 CH 2852023

(71) Anmelder: **FERAG AG**
**8340 Hinwil (CH)**

(72) Erfinder:
• **Martin, Ruge**
**8340 Hinwil (CH)**
• **Bretz, Markus**
**8340 Hinwil (CH)**
• **Fenile, Roberto**
**8340 Hinwil (CH)**

(74) Vertreter: **IPrime Rentsch Kaelin AG**
**Hirschengraben 1**
**8001 Zürich (CH)**

(54) **FÖRDERSYSTEM UND VERFAHREN ZUR FÖRDERUNG UND ANPASSUNG DER LAGE UND/ODER BEABSTANDUNG VON FÖRDERGÜTERN**

(57) Ein Fördersystem für Fördergüter, insbesondere für Paketstücke und Packstücke, ist offenbart. Das Fördersystem umfasst mindestens eine Fördervorrichtung, die mindestens ein Clustermodul und mindestens eine mit der Fördervorrichtung verbundene Steuerungseinheit enthält. Das Fördersystem weist ein übergeordnetes Leitsystem auf, das mit der mindestens einen Steuerungseinheit steuerungstechnisch verbunden ist, so dass eine Anpassung der Lage eines Förderguts und/oder Beabstandung zwischen benachbarten Fördergütern aufgrund von Steuerbefehlen des Leitsystems erfolgt.

Fig. 2

EP 4 299 478 A1

**Beschreibung**

Die vorliegende Erfindung betrifft ein Fördersystem für Fördergüter, insbesondere für Pack- und Paketstücke, und ein Verfahren zur Förderung und Anpassung der Lage und/oder Beabstandung der Fördergüter.

**Technologischer Hintergrund**

Das Prinzip clustereinheitsbasierter Fördervorrichtungen ist aus dem Stand der Technik bekannt. Es ermöglicht eine effektive und präzise Steuerung von liegend geförderten Fördergütern durch den Einsatz von angetriebenen Clustereinheiten wie beispielsweise Rollen oder Allseitenräder. Die angetriebenen Clustereinheiten werden verwendet, um die Fördergüter über die Förderanlage zu befördern und eine Mitnahmekraft zu erzeugen, die durch den Auflagedruck der Güter auf die Clustereinheiten übertragen wird.

Durch Rotation und oder Schwenken der Clustereinheiten kann die Bewegungsrichtung und Ausrichtung der Fördergüter gesteuert werden, was eine hohe Flexibilität bei der Handhabung verschiedener Güter und Materialien ermöglicht. Dieses Prinzip der Fördertechnik wird in vielen Branchen wie beispielsweise der Logistik, Fertigung und Verpackung eingesetzt, um eine effektive Materialbewegung zu gewährleisten.

Es gibt zwei Typen von Clustereinheiten, die im Fördersystem üblicherweise Einsatz finden. Dies sind Rollen und Allseitenräder. Rollen sind im Allgemeinen preiswerter als ungerichtete Räder, was sie zu einer kostengünstigeren Option für viele Anwendungen macht. Rollen sind in der Regel haltbarer und können schwerere Lasten bewältigen als ungerichtete Räder, was sie zu einer guten Wahl für Anwendungen qualifiziert, die eine schwere Handhabung erfordern. Rollen sind ausserdem einfacher und unkomplizierter als Allseitenräder, wodurch sie leichter zu installieren, zu warten und zu reparieren sind. Allerdings bewegen sich Rollen nur in eine Richtung, was ihre Manövrierfähigkeit im Vergleich zu Allseitenrädern einschränkt. Dies kann das Umfahren von Ecken oder Hindernissen erschweren und zu einer geringeren Präzision und Genauigkeit im Vergleich zu Allseitenrädern führen. Rollen können auch einen höheren Wartungsaufwand erfordern, um sicherzustellen, dass sie weiterhin ordnungsgemäss funktionieren, insbesondere bei Anwendungen, die eine starke Beanspruchung oder raue Betriebsbedingungen erfordern. Ausserdem können Rollen möglicherweise nicht die gleichen Geschwindigkeiten erreichen wie Allseitenräder, insbesondere bei Anwendungen, die eine schnelle und präzise Handhabung erfordern. Andererseits bieten Allseitenräder viele Vorteile in Bezug auf Manövrierbarkeit und Flexibilität. Es gibt jedoch auch einige potenzielle Nachteile, wie z. B. die im Vergleich zu Rollen höheren Kosten, die geringere Gewichtskapazität und die Komplexität. Da Allseitenräder komplexer sind als herkömmliche Räder oder Rollen, können sie ausserdem im Laufe der Zeit anfälliger für Verschleiss oder Beschädigungen sein, was zu höheren Wartungs- und Reparaturkosten und Ausfallzeiten führen kann. Trotz dieser potenziellen Nachteile kann die Flexibilität und Manövrierfähigkeit von Allseitenrädern bei vielen Anwendungen erhebliche Vorteile bieten, insbesondere in Situationen, in denen das Fördersystem ein breites Spektrum an Materialien befördern oder Hindernisse umfahren muss.

Das Clustereinheitsbasierte Fördersystem ist in der Lage, sowohl leichte als auch schwere Güter mit hoher Genauigkeit und Effizienz zu befördern. Es ist einfach zu bedienen und erfordert nur minimale Wartung, was es zu einer kosteneffektiven Lösung für viele Unternehmen macht. Darüber hinaus kann es durch die Integration von Sensoren und Steuerungssystemen automatisiert werden, um den Materialfluss weiter zu verbessern und die Produktivität zu steigern.

Es ist jedoch zu beachten, dass bei vergleichsweise leichten Stückgütern der Auflagedruck und somit die Reibhaftung zu gering sein können, um eine ausreichende Mitnahmekraft auf das Fördergut auszuüben. Eine Zunahme der Förderleistung und entsprechend der Fördergeschwindigkeit führt zu höheren Trägheitskräften und sogar aerodynamischen Effekten, welche der Reibhaftung entgegenwirken und die genügende Mitnahmekraft zusätzlich erschweren.

Besonders bei flexiblen und biegsamen Fördergütern wie Kleidungsstücken oder folierten Gütern kann es aufgrund der ungleichen Auflagefläche zu einer schlechten Haftreibung an den angetriebenen Clustereinheiten kommen. Diese Güter liegen nicht ausschliesslich auf den vorstehenden Clustereinheiten auf, sondern auch auf der Auflagefläche zwischen den Clustereinheiten. Folglich wird das Gewicht der Fördergüter ungleichmässig auf die Clustereinheiten übertragen, was die Haftreibung beeinträchtigen und zu einer unsachgemässen Bewegung und Positionierung der Güter führen kann.

Es besteht jedoch ein wachsendes Bedürfnis, insbesondere im Versandhandel, leichte und biegsame Fördergüter, wie Kleidungsstücke in Plastikhüllen verpackt, mittels Clustereinheitsweichen wie beispielsweise Rollenweichen störungsfrei zu fördern. Es ist daher von grosser Bedeutung, diese Fördergüter auch mit Hilfe von Clustereinheitsweichen zuverlässig und effektiv in die gewünschte Richtung zu lenken.

Ferner ist es auch wichtig Pakete effizient zu fördern und zu sortieren, da der Versandhandel und die E-Commerce-Industrie in den letzten Jahren stark gewachsen sind. Durch den Einsatz von automatisierten Fördersystemen mit Sortieranlagen können Pakete und Packstücke effizient und schnell von einem Ort zum anderen transportiert werden. Dies spart Zeit und Kosten, erhöht die Produktivität und reduziert potenzielle Fehlerquellen, die bei manuellen Prozessen auftreten können.

Ein Beispiel für eine Rollenweiche zur Sortierung von Fördergütern, wie Paketen, wird in der DE 39 10 524 C2 beschrieben. Diese Rollenweiche besteht aus mehreren, angetriebenen Rollen, die sich über die gesamte Breite der Förderbahn erstrecken und quer zur Förderrichtung angeordnet sind. Die Rollen sind einzeln in Wangen drehbar gelagert und können durch Schwenken die Fördergüter aus ihrer Förderrichtung ablenken. Diese Art der Rollenweiche eignet sich insbesondere für Ausschleusstellen.

Auch in der US 3,254,752 wird eine Rollenweiche beschrieben, die auf einer sich verzweigenden Fördervorrichtung platziert ist. Hierdurch wird eine gezielte Lenkung der Fördergüter auf eine der beiden stromabwärts verlaufenden Förderbahnen ermöglicht.

In der WO 2015/200460 A1 wird eine tellerförmige Rollenbaugruppe beschrieben, bei der eine Rolle über ein Zahnradgetriebe um eine senkrecht zur Förderebene angeordnete Achse schwenkbar ist. Die dazugehörige Förderweiche besteht aus einer Mehrzahl von in Reihen und Kolonnen angeordneten Rollenbaugruppen, die in eine Förderfläche eingelassen sind. Diese Art der Rollenweiche eignet sich insbesondere für den Einsatz in Fördersystemen, bei denen es auf eine präzise und zuverlässige Sortierung der Fördergüter ankommt.

Die Offenbarung von DE102021107088A1 betrifft ein Fördersystem zur Sortierung und Beförderung von Förderguteinheiten mit speziellen Fördergutantrieben. Diese Antriebe können die Einheiten in jeder Richtung innerhalb der Förderebene bewegen und werden einzeln angesteuert und gesteuert. Das System kann aus mehreren Antriebsmodulen, nicht parallelen oder orthogonalen Drehachsen und verschiedenen Detektions- und Zielpositionsermittlungsmitteln bestehen. Ein Verfahren beinhaltet die typisierende Erfassung von Förderguteinheiten, die Bestimmung von Zielpositionen und die Steuerung der Bewegung der Einheiten mit Hilfe der Fördergutantriebe, um eine sortierte Anordnung in den nachfolgenden Förderstrecken zu erreichen. Zusätzlich können weitere Schritte wie die Entscheidung über die Notwendigkeit von Bewegung und die Berechnung von Bewegungsrichtung und -stärke durchgeführt werden.

CN217550478U offenbart ein Logistikpaket-Lieferungssystem. Das System empfängt Pakete, misst und scannt deren Informationen, sortiert und puffert sie und bewegt diese dann in die gewünschte Richtung. Es gibt auch spezielle Mechanismen, wie einen Steuertisch, der die Richtung der Pakete ändern kann. Die Steuertische haben ein Support, einen Steuerungsmechanismus und ein Rollenlager, um den reibungslosen Betrieb der Sortierung zu gewährleisten. Es gibt auch unterschiedliche Mechanismen, um die Pakete zu trennen und zu bewegen, einschliesslich Förderbänder und Antriebsrollen.

EP4079660A1 beschreibt ein Sortier- und Transportmodul für die Handhabung von Paketen mit Rollenbaugruppen, die sich innerhalb einer Sortier- und Transportebene in jede Richtung drehen können. Das Modul verfügt über ein erstes und ein zweites Antriebsmittel, die die Drehung der Rollen bzw. der Rollenbaugruppen steuern und so die Vorwärtsbewegung des Pakets ermöglichen. Das Modul kann vier Rollenbaugruppen haben, deren Drehung durch ein Zahnrad und einen Elektromotor gesteuert wird. Das Modul kann in einem kastenförmigen Gehäuse untergebracht werden, und mehrere Module können nebeneinander angeordnet werden, um eine Sortier- und Transportlinie zu bilden.

In der DE102012014181A1 wird ein omnidirektionales Fördersystemmodul beschrieben, das mindestens zwei omnidirektionale Clustereinheiten, d.h. Allseitenräder, mit einzeln angetriebenen Förderrädern umfasst, die in einem von Null verschiedenen Winkel zueinander angeordnet sind. Das Modul kann drei nebeneinander angeordnete Clustereinheiten ohne parallele Wirkrichtungen aufweisen. Die Förderräder können in den Seitenmitten eines gleichseitigen Dreiecks angeordnet sein, wobei die Wirkrichtungen im 90° Winkel zu den Seiten des Dreiecks oder in einem Winkel ungleich Null zur zugehörigen Seite stehen. Das System kann steckbar und modular aufgebaut sein, wobei die Steuermittel mit den Antriebsmotoren verbunden sind. Es kann auch ein passives Fördersystemmodul enthalten sein, und das System kann in Gruppen von zwei oder drei Einheiten mit nicht orthogonalen Wirkrichtungen angeordnet werden.

US 10,569,976 B2 beschreibt ein Transportsystem für Kraftfahrzeuge, das Paletten und Behälter durch ein internes omnidirektionales Fördersystem transportiert. Das System umfasst einen Gewichtssensor und einen Infrarotsensor, um verfügbare Lagerplätze im Laderaum zu identifizieren, sowie ein Computergerät, um den Zielort auf der Grundlage des Gewichts und der voraussichtlichen Route des Fahrzeugs zu berechnen. Ein externes Fördersystem mit einer Heberampe wird verwendet, um die Palette oder den Behälter in das Fahrzeug zu befördern. Das interne Fördersystem nimmt die Palette oder den Behälter auf und bringt sie/ihn auf der Grundlage der Anweisungen des Computergeräts an den Zielort. Die Offenbarung umfasst auch ein Verfahren zum automatischen Verschieben von Paletten und Behältern innerhalb des Transportfahrzeugs und einen intelligenten Lagerbehälter zur Verwendung mit einem Transportfahrzeug oder einem Zug.

## Darstellung der Erfindung

Die vorliegende Erfindung strebt aufgabengemäss eine Lösung an, bei der mindestens einem der Nachteile des Standes der Technik mindestens bereichsweise entgegenwirkt und die eine effiziente auf verschiedene Transportelemente optimierte Förderlösung ermöglicht.

Diese Aufgabe wird durch die Merkmale der unabhängigen Patentansprüche gelöst.

Neben der Berücksichtigung der Nachteile des Standes der Technik wird eine einfachere und billigere Wartung des gesamten Fördersystems vorgesehen und auch die Förderdichte soll möglichst verbessert werden.

Die erfindungsgemässe Lösung weist ein För-

dersystem für Fördergüter, insbesondere für Paketstücke und Packstücke, auf. Das Fördersystem umfasst mindestens eine Fördervorrichtung, die mindestens ein Clustermodul enthält und mindestens eine mit der Fördervorrichtung verbundene Steuerungseinheit. Das Fördersystem weist ein übergeordnetes Leitsystem auf, das mit der mindestens einen Steuerungseinheit steuerungstechnisch verbunden ist, so dass eine Anpassung der Lage eines Förderguts und/oder Beabstandung zwischen benachbarten Fördergütern aufgrund von Steuerbefehlen des Leitsystems erfolgt.

Wie erwähnt, kann eine Anpassung der Lage eines Förderguts und/oder der Beabstandung zwischen benachbarten Fördergütern aufgrund von Steuerbefehlen des Leitsystems erfolgen.

Eine Anpassung der Lage eines Förderguts und die Beabstandung zwischen benachbarten Fördergütern kann aufgrund von Steuerbefehlen des Leitsystems erfolgen.

Eine Anpassung der Lage eines Förderguts oder die Beabstandung zwischen benachbarten Fördergütern kann aufgrund von Steuerbefehlen des Leitsystems erfolgen. Die mindestens eine Steuerungseinheit ist mit mindestens einer Rechnereinheit koppelbar, wobei die mindestens eine Rechnereinheit Steuerbefehle vom Leitsystem erhält. Somit kann von einer obersten Ebene der Fördervorgang initiiert und gesteuert werden. Die Rechnereinheit und Steuerungseinheit bilden eine weitere Ebene und kooperieren mit dem Leitsystem, können jedoch auch autonom agieren.

Die mindestens eine Rechnereinheit kann dazu ausgebildet sein, die Lage eines Förderguts und/oder Beabstandung zwischen benachbarten Fördergütern auf der Grundlage der Abmessungen und/oder eines Inhalts eines Transportelements optimiert zu bestimmen, was einen effizienteren Förderprozess ermöglicht.

Die Rechnereinheit kann dazu ausgebildet sein, die Lage eines Förderguts und die Beabstandung zwischen benachbarten Fördergütern auf der Grundlage der Abmessungen und/oder eines Inhalts eines Transportelements optimiert zu bestimmen oder zu berechnen.

Die Rechnereinheit kann dazu ausgebildet sein, die Lage eines Förderguts oder die Beabstandung zwischen benachbarten Fördergütern auf der Grundlage der Abmessungen und/oder eines Inhalts eines Transportelements optimiert zu bestimmen oder zu berechnen.

Die Bestimmung bzw. Berechnung kann auf der Grundlage der Abmessungen oder des Inhalts eines Transportelements erfolgen. Die Bestimmung kann jedoch auch auf der Grundlage der Abmessungen und des Inhalts eines Transportelements erfolgen.

In einer Ausführungsform erfolgt die Förderung sowie Anpassung der Lage und/oder Beabstandung der Fördergüter durch die mindestens eine Steuerungseinheit, die Steuerungsbefehle an die Clustermodule sendet.

In einer weiteren Ausführungsform erfolgt die Anpassung der Lage und/oder Beabstandung der Fördergüter ohne Steuerbefehle der Steuerungseinheit, indem die Clustermodule einfache Befehle und Instruktionen untereinander austauschen. Die Clustermodule verwenden dabei minimale Logik.

In einer weiteren Ausführungsform agiert die Steuerungseinheit unabhängig vom Leitsystem. Dies kann bei einfachen Transport- und Förderaufgaben der Fall sein oder wenn die Aufgaben bereits bekannt sind. Der Einsatz von künstlicher Intelligenz (KI) kann ebenfalls vorgesehen werden, da dann durch selbstlernende Systeme, sogenanntes «machine leaning», der Förderprozess weiter optimiert werden kann.

Das Fördersystem umfasst mindestens eine Sensoreinheit, die ausgelegt ist, die Position und/oder Ausrichtung mindestens eines Förderguts zu erfassen. Die erfindungsgemässe Lösung bietet zahlreiche Vorteile. Durch die Verwendung von Sensoreinheiten und einer Steuerungseinheit kann das Fördersystem flexibel und anpassungsfähig gestaltet werden, um eine optimale Ausrichtung und Beabstandung der Fördergüter zu gewährleisten. Dies kann zu einer effizienteren und schnelleren Förderung der Fördergüter führen, was wiederum zu einer höheren Produktivität und geringeren Ausfallzeiten führt. Darüber hinaus ist das Fördersystem auch einfach zu warten und zu reparieren, da die Sensoreinheiten und die Steuerungseinheit es ermöglichen, eventuelle Probleme schnell und präzise zu identifizieren.

Sensoreinheiten und Kommunikationseinheiten der Antriebseinheiten können drahtgebunden oder drahtlos ausgeführt sein.

Es ist vorteilhaft, die Ausrichtung von Fördergütern, wie z.B. Packstücken oder Paketstücken, anzupassen und damit ihre optimale Ausrichtung in Abhängigkeit von den Abmessungen der Transportelemente zu optimieren. Als Abmessung der Transportelemente stellt sich der Fachmann z.B. eine Öffnung des Transportelements, z.B. einer Transporttasche vor.

Durch eine optimierte Ausrichtung der Fördergüter können Störungen und Betriebsausfälle vermieden werden, was zu einer höheren Förderdichte und Effizienz des gesamten Fördersystems führt. Darüber hinaus kann die Auslastung der Transportelemente durch eine geschickte Anordnung des Fördergutes in den Transportelementen optimiert werden. Dies kann durch optimierte Ausrichtung und Abstände erreicht werden. Zudem kann eine optimierte Beabstandung auch zu einer gleichmässigen und gewichtsoptimierten Auslastung des Fördersystems beitragen.

Schliesslich kann das Fördersystem auch für den Beladestand der Clustereinheit optimieren werden. Das heisst welches Fördergut in einem Transportelement gefördert werden soll, damit das Transportelement optimiert beladen wird. Um dies zu erreichen, kann eine Vielzahl von Fördergütern gedreht, beschleunigt, gestoppt oder in anderer vergleichbarer Weise beeinflusst werden.

Die erfindungsgemässe Lösung kann durch die folgenden weiteren, jeweils für sich vorteilhaften Ausführungen ergänzt oder weiter verbessert werden.

Gemäss einer Ausführungsform ist vorgesehen, dass die mindestens eine Sensoreinheit ausgelegt ist, die Position mindestens eines Fördergutes zu erfassen.

Dies ist deshalb wichtig, um die Beabstandung zwischen benachbarten Transportelementen anpassen zu können. Dadurch kann nicht nur eine optimale Auslastung der Transportelemente erreicht werden, sondern auch eine effiziente Nutzung des verfügbaren Förderraums. Darüber hinaus kann die Positionserfassung auch dazu beitragen, dass die Fördergüter in einer bestimmten Reihenfolge befördert werden, was bei der Sortierung von Paketen oder anderen Gütern von grosser Bedeutung sein kann.

Alternativ oder ergänzend kann die mindestens eine Sensoreinheit die Ausrichtung mindestens eines Fördergutes erfassen. Die Anpassung der Ausrichtung ist insbesondere vorteilhaft, um eine optimierte Einlaufposition des Förderguts an der Öffnung eines Förderelements zu erreichen. Darüber hinaus kann eine Möglichkeit zur Anpassung der Ausrichtung von Fördergütern auf der Fördereinrichtung dazu beitragen, Kollisionen zwischen benachbarten Fördergütern zu vermeiden und somit Störungen zu reduzieren.

Ausserdem können durch die Möglichkeit der Anpassung der Beabstandung und der Ausrichtung der Fördergüter unterschiedliche Arten von Transportelementen effizient genutzt werden, um verschiedene Arten von Fördergütern zu befördern. Dies erhöht die Flexibilität des Fördersystems und ermöglicht eine effektive Abwicklung von Transportaufgaben.

Gemäss einer weiteren Ausführungsform ist vorgesehen, dass das mindestens eine Clustermodul mindestens eine Clustereinheit enthält.

Es ist von Vorteil, wenn das Clustermodul mehr als eine Clustereinheit enthält, um einen höheren Freiraum bei Manipulation von Fördergütern zu erreichen. Die Entscheidung für die geeignete Anzahl und Gestaltung von Clustermodulen hängt von verschiedenen Faktoren ab, wie beispielsweise der Grösse, Gewicht und Form der Fördergüter. Es ist auch möglich, die Clustermodule mit einem Schienensystem auszustatten, so dass mindestens eine im Clustermodul integrierte Clustereinheit horizontal verfahrbar ist. Alternativ oder zusätzlich kann die integrierte Clustereinheit auch vertikal verfahrbar sein. Dies hat den Vorteil, dass der Abstand benachbarter Clustereinheiten angepasst werden kann und somit die Gesamtlösung flexibler wird und an die Form des Fördergutes angepasst werden kann.

Die Clustermodule mit den Clustereinheiten können analog eines Vektorfelds abgebildet und die einzelnen Clustereinheiten separat gesteuert werden, sodass Fördergut optimal transportiert, bewegt, versetzt, oder gedreht werden kann.

Vorteilhafterweise ist eine Clustereinheit als eine Kugel ausgeführt. Weiterhin kann die Clustereinheit als eine Rolle oder ein Allseitenrad ausgeführt sein. Darüber hinaus kann jede Clustereinheit antriebbar oder antrieblos ausgestaltet sein.

Zudem und alternative kann jede Clustereinheit zwischen antriebbar oder antrieblos umgeschaltet werden.

Es ist vorteilhaft als Clustereinheiten statt Rollen oder Allseitenräder Kugeln zu benutzen. Kugeln bieten im Vergleich zu Rollen oder Allseitenrädern eine höhere Beweglichkeit und Flexibilität in einer Fördersystemanwendung. Sie können sich in alle Richtungen frei drehen, was eine nahezu reibungslose Fahrt durch enge Kurven und um Hindernisse wie zum Beispiel andere Fördergüter ermöglicht. Darüber hinaus können Kugeln das Gewicht gleichmässiger verteilen als Rollen oder Räder, was zu einer geringeren Abnutzung des Fördersystems führt. Dies kann wiederum zu einer längeren Lebensdauer des Fördersystems und geringeren Wartungskosten führen.

Die Verwendung von Kugeln anstelle von Rollen oder Rädern kann auch zu einer Reduzierung von Lärm und Vibrationen beitragen, was insbesondere in Anwendungen von Vorteil ist, die eine ruhige oder vibrationsarme Umgebung erfordern. Ferner sind Kugeln auch deswegen vorteilhaft, weil diese nicht geschwenkt werden müssen, damit ein Fördergut ohne zusätzliche Reibung an diese anfahren kann. Dies ist bei den anderen zwei Konstruktionsvarianten für Rollen und Allseitenräder nicht der Fall, denn diese sind nur bilateral symmetrisch.

Die Tatsache, dass Kugeln sphärisch symmetrisch sind, stellt weite Vorteile dar, vor allem im Hinblick auf eine Vielzahl von zusammenarbeitenden Clustereinheiten und/oder Clustermodulen. So ist es beispielsweise möglich, mindestens einige der Clustereinheiten passiv zu lassen und nur einschlägige Clustereinheiten anzutreiben. Diese Flexibilität ist dann besonders vorteilhaft, wenn grössere Fördergüter gefördert werden, welche einen nicht so kleinen Abstand zwischen Clustereinheiten benötigen. Mit dieser Lösung kann Energie gespart und die Effizienz des Fördersystems gesteigert werden.

Es ist besonders vorteilhaft, die Kugeln aus Polyamid, Edelstahl und Keramik herzustellen. Polyamid-Kugeln haben eine glatte und harte Oberfläche, die eine reibungslose Bewegung und geringe Reibung ermöglicht, was wiederum zu einem energieeffizienten Fördersystem beiträgt. Darüber hinaus haben Polyamid-Kugeln eine hohe Beständigkeit gegenüber Abnutzung und eine hohe Tragfähigkeit, was eine lange Lebensdauer des Fördersystems gewährleistet. Edelstahl-Kugeln sind beständig gegen Korrosion und Abnutzung, während Keramik-Kugeln eine hohe Härte und Verschleissfestigkeit aufweisen. Die Wahl des besten Materials hängt von den spezifischen Anforderungen der Fördersystemanwendung ab, wie z.B. der Umgebung, in der das Fördersystem betrieben wird, der Tragfähigkeit der Kugeln und der erforderlichen Beweglichkeit.

Zudem kann die Oberfläche der Kugeln gummiert sein, was dazu beiträgt, dass das Fördersystem leiser und vibrationsärmer läuft. Gummi hat eine hohe Dämpfungsfähigkeit, was bedeutet, dass es Schwingungen und Geräusche absorbieren kann. Durch die Gummi-Beschichtung auf der Kugeloberfläche kann die Reibung zwischen der Kugel und anderen Oberflächen optimiert werden, was zu einer reibungsoptimierten Bewegung und einem energieeffizienteren Betrieb des Fördersystems beiträgt. Darüber hinaus kann die Gummi-Beschichtung dazu beitragen, dass die Kugeln eine bessere Haftung auf der Transportoberfläche haben und somit ein Verrutschen oder Abrutschen verhindert wird.

Die Clustereinheit besteht jedoch nicht nur aus einem oberen Teil, der im Kontakt mit Fördergütern ist, sondern auch aus einem Antriebsteil, der den oberen Teil in Bewegung bringt. Der Antriebsteil kann verschiedene Gestaltungsformen haben. So kann dieser aus klassischen mechanischen Bestandteilen wie Zahnräder, Riemen und Lager bestehen. Nichtsdestoweniger sind solche Ausführungsformen kompliziert, teuer, schwierig zur Wartung und anfällig für Störungen.

Aus diesem Grund ist es vorteilhaft, die klassische Lösung durch ein Magnetkupplungssystem zu ersetzen. Das Magnetkupplungssystem besteht aus zwei Sätzen von Magneten, einem auf der Antriebswelle des Motors und einem auf der Nabe des oberen Teils der Clustereinheit. Diese Magnete sind so angeordnet, dass sie sich gegenseitig anziehen, aber durch einen kleinen Spalt getrennt sind. Wenn sich der Motor dreht, erzeugt er ein bewegtes Magnetfeld, das den oberen Teil in Drehung versetzt.

Durch den Einsatz eines Magnetkupplungssystems ist es möglich, eine kostengünstige und hocheffiziente Lösung zu finden, da es keinen physischen/mechanischen Kontakt zwischen dem Motor und dem Oberteil gibt, was zu weniger Reibung und Verschleiss an den Komponenten führt. Ein solches System kann für einen beliebigen oberen Teil, ungeachtet seiner Geometrie, eingesetzt werden.

Im Oberteil der Clustereinheit kann eine Reihe von Dauermagneten nach einem genauen Muster eingebettet werden. Diese Magnete wären kreisförmig angeordnet, wobei die Polarität wechselt und eine Drehung um eine Achse ermöglicht. Um eine Drehung um die beiden anderen Achsen zu erreichen, können zusätzliche Magnete im rechten Winkel zum ersten Satz hinzugefügt werden, wodurch ein dreidimensionales Magnetfeld entsteht.

Um das Magnetkupplungssystem anzutreiben, kann ein Motor im Inneren des Oberteils angebracht werden, wobei ein Magnetring an der Antriebswelle des Motors befestigt ist. Alternativ oder ergänzend kann der Antrieb mit einem Magnetring auf einem Sockel oder einer Plattform unterhalb des Oberteils montiert werden. Der Magnetring wäre so angeordnet, dass er auf das magnetische Muster auf der Unterseite der Halbkugel ausgerichtet ist und eine Drehung um alle drei Achsen ermöglicht.

Eine andere Lösung, die eingesetzt werden kann, ist ein kardanischer Mechanismus. Ein Kardan ist ein Satz von zwei oder drei Ringen, die im rechten Winkel zueinander angebracht sind, wobei sich jeder Ring unabhängig um seine eigene Achse drehen kann. Durch die Verbindung einer halbkugelförmigen Schale mit dem kardanischen Mechanismus ist es möglich, eine Drehung, um alle drei Achsen zu erreichen. Der kardanische Mechanismus kann durch Motoren angetrieben werden, die an jedem Ring angebracht sind, wobei jeder Motor die Drehung des entsprechenden Rings antreibt.

Gemäss einer weiteren Ausführungsform ist vorgesehen, dass die mindestens eine Fördervorrichtung eine Vielzahl von Clustermodulen enthält. Darüber hinaus ist jedes dieser Clustermodule als ein Kugel-, Roller- oder Allseitenradmodul ausführbar.

Der Vorteil dieser Lösung liegt in der Möglichkeit, verschiedene Clustermodule miteinander zu kombinieren. Zum Beispiel ist es möglich, die Fördervorrichtung in zwei Hälften zu teilen, wobei die erste Hälfte mit Kugelmodulen und die zweite Hälfte mit Rollenmodulen bestückt ist. Mit dieser Lösung können die verschiedenen Vorteile der beiden Clustermodule in einer Fördervorrichtung genutzt werden.

Zusätzlich können auch Clustermodule unterschiedlicher Grösse oder Materialien kombiniert werden, um den Anforderungen der Fördergüter gerecht zu werden. Eine weitere Möglichkeit ist die Verwendung von Clustermodulen mit unterschiedlicher Tragfähigkeit, um auch schwere Güter problemlos transportieren zu können.

Darüber hinaus bietet die Verwendung von verschiedenen Clustermodulen auch eine höhere Flexibilität bei der Gestaltung des Fördersystems. Zum Beispiel kann je nach Bedarf ein bestimmtes Clustermodul einfach ausgetauscht oder hinzugefügt werden, um die Fördereffizienz zu optimieren.

Eine weitere Möglichkeit ist die Kombination von verschiedenen Clustermodulen innerhalb eines einzigen Clustermoduls, um so den Transport von Gütern mit unterschiedlichen Anforderungen zu ermöglichen. So kann beispielsweise ein Clustermodul sowohl mit Kugeln als auch mit Rollen ausgestattet sein, um eine optimale Förderung verschiedener Güter zu gewährleisten.

Gemäss einer weiteren Ausführungsform ist vorgesehen, dass die mindestens eine Fördervorrichtung eine Vielzahl von Clustermodulen enthält. Ferner ist jedes dieser Clustermodule durch die mindestens eine Steuerungseinheit individuell steuerbar.

Der Fachmann erkennt die Vorteile dieser Lösung. So kann z.B. die Ausrichtung mehrerer Fördergüter auf der Fördervorrichtung individuell angepasst werden. Gleiches gilt für die Anpassung des Abstands zwischen benachbarten Fördergütern, der grösser oder kleiner werden kann oder alternativ zu gewissen Mustern führt. Daraus ergibt sich, dass eine solche Lösung die Förderdichte des Fördersystems erhöht, was zu einer verbesserten Effizienz führt.

Darüber hinaus kann durch die individuelle Steuerung der Transportmodule eine bessere Lastverteilung auf den Transportgeräten erreicht werden. Dies ist insbesondere bei schweren oder ungleichmässig verteilten Gütern wichtig, um eine Überlastung des Förderers zu vermeiden und die Lebensdauer des Systems zu verlängern. Zudem kann die individuelle Steuerung der Clustermodule dazu beitragen, dass das Fördergut in einer bestimmten Reihenfolge transportiert wird, was beim Sortieren von Paketen oder anderen Gütern von grosser Bedeutung sein kann.

Gemäss einer weiteren Ausführungsform ist vorgesehen, dass das mindestens eine Clustermodul eine Vielzahl von Clustereinheiten enthält. Zudem ist jede dieser Clustereinheiten durch die mindestens eine Steuerungseinheit individuell steuerbar.

Diese Ausführungsform geht noch über die vorherige hinaus und bietet den Vorteil einer individuellen Ansteuerung der Clustereinheiten innerhalb eines Clustermoduls. Dadurch wird die Flexibilität des Fördersystems weiter erhöht, was insbesondere bei grossen Entfernungen zwischen den einzelnen Clustereinheiten eine wesentliche Rolle spielen kann.

Durch die individuelle Steuerung jeder Clustereinheit innerhalb eines Clustermoduls können auch spezielle Anforderungen an die Förderung von bestimmten Gütern erfüllt werden. Zum Beispiel kann die Drehgeschwindigkeit oder der Rhythmus der Clustereinheiten angepasst werden, um fragile oder empfindliche Güter zu schonen. Ebenso kann die individuelle Steuerung dazu beitragen, Engpässe im Fördersystem zu vermeiden und den Materialfluss zu optimieren. Eine weitere mögliche Anwendung ist die gezielte Trennung von verschiedenen Fördergütern, um eine effiziente Sortierung zu ermöglichen.

Gemäss einer weiteren Ausführungsform ist die Sensoreinheit als ein optischer Sensor ausgeführt.

Der optische Sensor kann in verschieden Formen ausgeführt sein. Beispielsweise kann der optische Sensor eine Kamera sein. Darüber hinaus kann der optische Sensor verschiedene Arten von Informationen über die Fördergüter sammeln. So ist es beispielsweise möglich, mit Hilfe des optischen Sensors Barcodes oder QR-Codes auf den Fördergütern zu erfassen. Diese Informationen können dann von der Steuerungseinheit des Fördersystems genutzt werden, um die Fördergüter gezielt an die gewünschten Bestimmungsorte zu transportieren.

Eine weitere Möglichkeit besteht darin, dass der optische Sensor zur Erkennung von Farben eingesetzt wird. Dadurch kann das Fördersystem beispielsweise unterschiedliche Pakettypen oder -grössen automatisch erkennen und entsprechend behandeln.

Gemäss einer weiteren Ausführungsform ist vorgesehen, dass die mindestens eine Steuerungseinheit mit mindestens einer Rechnereinheit koppelbar ist.

Die mindestens eine Rechnereinheit kann beispielsweise ein Computer oder Rechner sein. Nichtsdestoweniger sind auch andere Formen wie ein Server oder Cloudsysteme möglich. Darüber hinaus beinhaltet die Rechnereinheit relevante Software.

Schliesslich kann die Rechnereinheit auch mit anderen Systemen innerhalb des Fördernetzwerks verbunden werden, um einen reibungslosen Informationsfluss und eine effektive Steuerung des gesamten Fördersystems zu gewährleisten. Beispielsweise kann die Rechnereinheit mit einem Lagerverwaltungssystem oder Materialflussrechner verbunden werden, um die Bestände von Fördergütern in Echtzeit zu überwachen und zu optimieren.

Gemäss einer weiteren Ausführungsform ist vorgesehen, dass die mindestens eine Rechnereinheit dazu ausgebildet ist, auf Basis der Abmessungen optimierte Ausrichtungen von Fördergütern zu bestimmen bzw. zu berechnen. Alternativ oder ergänzend kann die mindestens eine Rechnereinheit dazu ausgelegt sein, eine optimierte Beabstandung zwischen benachbarten Fördergütern zu berechnen. Zudem kann alternativ oder ergänzend sowohl die optimierte Ausrichtung als auch die optimierte Beabstandung auf der Grundlage eines Inhalts eines Transportelements berechnet werden.

Diese Lösung ermöglicht eine störungsfreie und effiziente Beladung der Transportelemente mit Fördergut. Darüber hinaus können mögliche Beschädigungen und Abnutzungen des Transportelements durch unsachgemässe Ausrichtung der Fördergüter reduziert werden. Dies kann beispielsweise der Fall sein, wenn das Transportelement mit einer scharfen Kante des Förderguts in Berührung kommt. Durch die richtige Ausrichtung und den richtigen Abstand der Fördergüter kann auch das Risiko verringert werden, dass die Fördergüter nicht korrekt in die Transportelemente geladen werden. Dies kann auf zwei Arten geschehen.

Erstens wird das Transportelement nicht mit einem Fördergut beladen, weil es nicht in die Öffnung des Transportelements passt. Dies kann zu einer möglichen Beschädigung des Fördergutes führen. Zweitens wird das Transportelement zwar beladen, aber nicht optimiert. Das bedeutet, dass das Transportelement weniger Fördergut transportieren kann, was zu einer geringeren Förderdichte des Fördersystems führt. Wie bereits erwähnt, wird das Risiko des Eintretens dieser beiden Fälle durch diese Ausführungsform minimiert.

Gemäss einer weiteren Ausführungsform ist vorgesehen, dass die Anpassung der Ausrichtung und alternativ oder ergänzend der Beabstandung der Fördergüter, durch die mindestens eine Steuerungseinheit durchführbar ist.

Die mindestens eine Steuerungseinheit kann beispielsweise als eine speicherprogrammierbare Steuerung ausgeführt sein. Darüber hinaus sollte diese mit der Fördervorrichtung verbunden sein.

Zusätzlich können auch weitere Sensoren, wie beispielsweise Gewichts- oder Volumensensoren oder Kontursensoren, in das Fördersystem integriert werden, um eine noch präzisere und effizientere Steuerung der Fördergüter zu ermöglichen. Diese Sensoren können beispielsweise dazu genutzt werden, um das Gewicht und Volumen der Fördergüter zu bestimmen, um die optimale Anzahl der Fördergüter in einem Transportelement zu ermitteln und somit eine Überladung oder Unterladung des Transportelements zu vermeiden.

Darüber hinaus kann die mindestens eine Steuerungseinheit auch mit einem Warnsystem verbunden sein, um bei Fehlfunktionen oder Störungen im Fördersystem einen Alarm auszulösen und so eine schnelle Behebung der Probleme zu ermöglichen. Auch die Integration einer Fernsteuerung oder einer automatischen Fehlererkennung und - behebung ist möglich und vorteilhaft.

Gemäss einer weiteren Ausführungsform ist an der mindestens einen Fördervorrichtung mindestens eine Zuführstation angeordnet.

Diese Zuführstationen dient dazu, die Transportelemente, beispielsweise eine Transporttasche, mit sortierten, ausgerichteten und beanstandenden Fördergütern zu beladen. Zudem kann die Fördervorrichtung die Fördergüter an mehrere Zuführstationen abgeben, die entlang der Fördervorrichtung angeordnet sind, um die Effizienz noch weiter zu erhöhen.

Ferner ist es ebenfalls wichtig sicherzustellen, dass ein optimiert ausgerichtetes Fördergut in das Transportelement richtig abgegeben wird. Dies kann mittels eines Rutschelements erfolgen, das als eine geneigte Plattform ausgeführt werden kann. Weiterhin kann diese Plattform zulassen, dass die Fördergüter direkt aus der Fördervorrichtung ins Transportelement abgegeben werden. Dies ist deshalb von Vorteil, weil es eine einfachere Konstruktion ermöglicht und somit die Kosten reduziert werden können.

Gemäss einer anderen Ausführungsform ist vorgesehen, dass an der mindestens einen Fördervorrichtung mindestens eine Staustation angeordnet ist.

Es ist besonders vorteilhaft die Fördervorrichtung mit der Staustation oder Bufferstation zu versehen. Derartige Stationen sind für Fördergüter, welche durch die Fördervorrichtung aus verschiedenen Gründen nicht an die mindestens eine Zuführstation gefördert wurden.

Die Staustation kann beispielsweise als ein Auffangbehälter oder ein Zwischenlager ausgeführt sein. Dadurch wird gewährleistet, dass die Fördergüter kontrolliert und ohne Verzögerung weiterverarbeitet werden können. Die Staustation kann auch dazu beitragen, Engpässe im Fördersystem zu vermeiden und den reibungslosen Ablauf des Förderprozesses zu gewährleisten. Darüber hinaus kann die Staustation dazu beitragen, dass die Fördergüter geordnet werden, so dass diese anschliessend in der richtigen Reihenfolge und ohne Verzögerung weitergeleitet werden können. Ein weiterer Vorteil der Staustation ist, dass sie den Bedarf an manuellen Eingriffen reduziert, da sie eine automatisierte Zwischenlösung bietet, um die Fördergüter kontrolliert und sicher zu lagern, bis sie weiterverarbeitet werden können.

Gemäss einer weiteren Ausführungsform ist vorgesehen, dass das Fördersystem mit einer Markierungsvorrichtung ausgestattet ist.

Die Markierungsvorrichtung kann beispielsweise ein Drucker oder Stempelgerät sein. Es sind jedoch auch andere Möglichkeiten wie eine Farbmarkierung, ein Etikettierer oder ein Lasermarkierer möglich. Die Markierungsvorrichtung dient dazu, die Fördergüter auf der Fördervorrichtung zu markieren und somit eine eindeutige Identifizierung zu ermöglichen, was von grosser Bedeutung für den Förderprozess ist.

Gemäss einer weiteren Ausführungsform ist vorgesehen, dass die Markierungsvorrichtung mindestens ein Fördergut mit einem Identifikationsmittel bezeichnet. Alternativ oder ergänzend kann mindestens ein Fördergut mit einem Ausrichtungscode bezeichnet werden. Der Ausrichtungscode kann sichtbar, nicht sichtbar, oder ablösbar aufgebracht werden.

Es ist auch vorteilhaft ein Fördergut vor Einführung in das Fördersystem zu Bedrucken und/oder mit einem Kleber zu versehen, da dieses dann direkt verarbeitet werden kann.

Das optische System bestehend aus einer Kamera zur Verfolgung der Position eines Förderguts kann durch ein codebasiertes System ersetzt werden. Dies ist besonders vorteilhaft, weil das codebasierte System weniger komplex und kostengünstiger als eine Kamera ist. Die Lösung besteht darin, auf jedes Fördergut ein Identifikationsmittel aufzubringen, welches eine präzisere Verfolgung jedes Förderguts ermöglicht. Zudem kann das Identifikationsmittel beispielsweise als ein Barcode, QR-Code oder RFID-Tag ausgeführt sein.

Alternativ oder ergänzend ist es möglich den Ausrichtungscode auf mindestens ein Fördergut zu drucken oder zu markieren, der als Referenz seiner Position und/oder Rotation dienen kann. Darüber hinaus kann dieser Code von einem Sensor des Fördersystems erkannt werden und damit auch die Position und/oder des Förderguts. Ferner ist es vorteilhaft, aufgrund dieser Information die Clustereinheiten derart zu steuern, dass eine gewünschte Orientierung des Förderguts erreicht wird.

Als Sensor kommen verschiedene Optionen in Frage. So ist es beispielsweise möglich einen fotoelektrischen Sensor, zu verwenden, um die Ränder und/oder Muster des Codes zu erkennen und die Drehung auf der Grundlage der Position der Ränder und/oder des Musters zu bestimmen oder zu berechnen.

Der fotoelektrische Sensor kann über oder unter der Fördervorrichtung angebracht werden, und das Fördergut mit dem Ausrichtungscode wird durch einen Lichtstrahl geführt. Der Sensor erkennt den Code durch die Unterbrechung des Lichtstrahls, die durch den Code verursacht wird. Sobald der Sensor die Ausrichtung des Ausrichtungscodes erkannt hat, kann dieser ein Signal zur Verarbeitung an die Rechnereinheit und/oder Steuereinheit senden. Ein Korrektursignal kann dann an einschlägige Clustereinheiten gesendet werden, damit die Orientierung des Förderguts entsprechend anpasst werden kann. Dadurch wird sichergestellt, dass das Fördergut in die gewünschte Ausrichtung gedreht wird, bevor es den nächsten Schritt im Förderprozess erreicht.

Ein weiterer Vorteil dieses Systems besteht darin, dass es zuverlässiger und robuster ist, da es sich nicht auf die visuelle Erkennung verlässt, die durch die Lichtverhältnisse, die Ausrichtung des Förderguts oder andere Faktoren beeinträchtigt werden kann. Unter anderen Faktoren kann sich der Fachmann beispielsweise eine Verformung des Förderguts vorstellen, die eine genaue Orientierungserkennung durch eine Kamera erschweren würde.

Gemäss einer weiteren Ausführungsform ist vorgesehen, dass das Identifikationsmittel der Ausrichtungscode ist.

Das Identifikationsmittel kann die Abmessungen bzw. Dimensionen des Födeguts beinhalten oder umfassen, bevorzugt in einem Code.

Es ist besonders vorteilhaft den Ausrichtungscode auf jedem Fördergut auch zur Verfolgung des Förderguts in der gesamten Lieferkette zu verwenden, und dadurch das Identifikationsmittel zu ersetzen. Dies würde eine verbesserte Effizienz der Lieferkette zusammenbringen und das ganze Fördersystem ebenfalls verbilligen, denn es wäre nicht notwendig, eine getrennte Technologie, für die Packetverfolgung zu nutzen. Ferner ist es auch möglich, den Ausrichtungscode nur zum Erkennen der Orientierung eines Förderguts zu nutzen aber gleichzeitig mit dem Drucken dieses Code ein Identifikationsmittel, zum Beispiel einen QR Code, zu verwenden. Dies würde ebenfalls eine grössere Effizienz und geringere Kosten mit sich bringen, da bei dieser Lösung kein komplexes, optisches System notwendig wäre.

Der gedruckte Ausrichtungscode kann ein einfaches schwarz-weisses oder graustufiges quadratisches Gittermuster sein. Diese Art von Muster besteht aus abwechselnd schwarzen und weissen oder graustufigen Quadraten, wobei die Grösse und der Abstand der Quadrate angepasst werden können, um eine Reihe von Auflösungen und Empfindlichkeiten zu ermöglichen. Ein Vorteil der Verwendung eines quadratischen Rastermusters besteht darin, dass es mit Standarddrucktechniken leicht erstellt und gedruckt werden kann und von einer Vielzahl optischer Sensoren, einschliesslich Kameras, Scannern und Strichcodelesern, leicht erkannt werden kann. Darüber hinaus bieten die abwechselnd schwarzen und weissen oder in Graustufen gehaltenen Quadrate ein kontrastreiches Muster, das auch bei schlechten Lichtverhältnissen leicht erkannt werden kann.

Es wäre auch möglich das Muster des Ausrichtungscodes mit verschiedenen Merkmalen auszustatten, um eine verbesserte Detektion und Genauigkeit zu erreichen. Das Muster kann mit Referenzmarkierungen versehen werden, um die Erkennungsgenauigkeit zu verbessern, während ein Farbmuster zusätzliche Informationen und ein kontrastreiches Muster liefern kann. Eine Erhöhung der Auflösung des Musters kann ebenfalls zu einer höheren Genauigkeit und Empfindlichkeit führen. Die Verwendung eines Musters mit einzigartigen Merkmalen, wie z. B. gekrümmten Linien oder nicht rechtwinkligen Formen, kann die Erkennungsgenauigkeit ebenfalls verbessern, kann aber schwieriger zu erstellen und zu drucken sein als ein einfaches quadratisches Gittermuster.

Gemäss einer weiteren Ausführungsform ist vorgesehen, dass die Ausrichtung des Förderguts als die Ausrichtung einer Aussenhülle des Förderguts mittels der Sensoreinheit erfassbar ist. Alternativ oder ergänzend ist die Ausrichtung des Ausrichtungscodes mittels der Sensoreinheit erfassbar.

Die Vorteile dieser Ausführungsform wurden bereits oben beschrieben. Es ist jedoch zu erwähnen, dass durch die Erfassung der Ausrichtung des Förderguts oder des Ausrichtungscodes mittels der Sensoreinheit eine präzise Kontrolle und Steuerung des Fördervorgangs ermöglicht wird. Auf diese Weise können mögliche Störungen und Betriebsausfälle vermieden werden, was zu einer erhöhten Effizienz und Produktivität des Fördersystems führt. Darüber hinaus können durch eine präzise Ausrichtung und Steuerung der Fördergüter mögliche Beschädigungen der Güter reduziert werden.

Eine Erfassungsvorrichtung kann die Dimension des Förderguts erfassen. Die erfassten Werte können als oder im Identifikationsmittel angegeben bzw. codiert werden.

Die erfindungsgemässe Lösung weist auch ein Verfahren zur Förderung und Anpassung der Lage bzw. Ausrichtung und alternativ oder ergänzend Beabstandung von Fördergütern, insbesondere von Paketstücken und Packstücken, bevorzugt mit mindestens einem Fördersystem, auf. Das Verfahren umfasst einen Erfassungsschritt bei dem die Lage und/oder Position eines Förderguts erfasst wird. In einem zweiten Schritt wird eine Bestimmung der Ausrichtung und/oder der Beabstandung zwischen benachbarten Fördergütern durch eine Rechnereinheit durchgeführt. Der dritte Schritt umfasst eine Anpassung der Ausrichtung und/oder der Beabstandung zwischen benachbarten Fördergütern durch mindestens ein von der Steuerungseinheit gesteuertes Clustermodul mit mindestens einer Clustereinheit. Schliesslich wird im vierten Schritt ein Transportelement mit mindestens einem Fördergut mit optimierter Ausrichtung beladen. Das Verfahren optimiert vorteilhafterweise auch die Beabstandung zwischen benachbarten Fördergütern.

Die mindestens eine Clustereinheit kann um mindestens eine ihrer Achsen mittels eines Antriebs gedreht werden, was durch einen einfachen Aufbau realisiert werden kann. Besonders vorteilhaft ist es, wenn die mindestens eine Clustereinheit um mehrere Achsen gedreht werden kann, um die Flexibilität des Fördersystems zu erhöhen. Ausserdem kann die Drehgeschwindigkeit z.B. in Abhängigkeit vom Fördergut angepasst werden.

Eine Clustereinheit kann mit weiteren oder benachbarten Clustereinheiten kommunizieren oder Informationen austauschen. Dies kann ohne Steuerbefehle der Steuerungseinheit erfolgen. So lassen sich Schwarmbewegungen analog einem Vektorfeld realisieren.

Ein Identifikationsmittel des Förderguts und ein Datenelement des Transportelements können miteinander verknüpft werden. Dadurch werden eine einfachere Zuordnung und Verarbeitung sowie Separierung erreicht. Somit ist z.B. dem Leitsystem bekannt, welches Fördergut sich in welcher Transporttasche befindet.

Folgend sind weitere Ausführungsformen und Aspekte gemäss der vorliegenden Offenbarung aufgezeigt.

i. Ein Verfahren zur Förderung und Anpassung der Lage und/oder Beabstandung von Fördergütern, insbesondere von Pack- und Paketstücken, bevorzugt für einen Hängeförderer, insbesondere ein Taschenhängeförderer, mit mindestens einer Fördervorrichtung mit Clustermodulen, umfassend mindestens die Schritte: Erfassen einer Lage und/oder Position eines Förderguts; Bestimmen der Ausrichtung und/oder der Beabstandung zwischen benachbarten Fördergütern durch eine Rechnereinheit; Anpassung der Ausrichtung und/oder der Beabstandung zwischen benachbarten Fördergütern durch mindestens ein von der Steuerungseinheit gesteuertes Clustermodul mit mindestens einer Clustereinheit; und Weiterverarbeitung des ausgerichteten Förderguts.

ii. Ein Fördersystem wie beschrieben, wobei eine Fördervorrichtung mehrere Clustermodule enthält, welche als Weiche direkt hinter einer Abgabestation eines Hängeförderers ausgestaltet sind.

iii. Das Fördersystem nach Aspekt ii, wobei die Clustermodule als Weiche die Weiterbeförderung des Förderguts in unterschiedliche Richtungen bestimmen und /oder beeinflussen.

Die erfindungsgemässe Lösung kann durch die folgenden weiteren, jeweils für sich vorteilhaften Ausführungen zudem ergänzt und weiter verbessert werden.

Für den Fachmann ist es selbstverständlich, dass alle beschriebenen Ausführungsformen in einer erfindungsgemässen Ausgestaltung der vorliegenden Erfindung verwirklicht sein können, sofern sie sich nicht explizit gegenseitig ausschliessen.

Im Folgenden wird die vorliegende Erfindung nun anhand konkreter Ausführungsbeispiele und Figuren näher erläutert, ohne jedoch auf diese beschränkt zu sein.

Durch das Studium dieser besonderen Ausführungsformen und Figuren können sich für den Fachmann weitere vorteilhafte Ausführungen der vorliegenden Erfindung ergeben.

**Figurenbeschrieb**

Anhand der nachfolgenden Figuren werden Ausführungsbeispiele der Erfindung beschrieben, wobei gleiche Referenzzeichen gleiche oder ähnliche Teile bezeichnen.

Es zeigen:

Fig. 1a: Eine schematische Darstellung einer Logistikkette mit einer Verarbeitung durch ein Fördersystem, wobei eine Übergabe an Fördertaschen erfolgt;

Fig. 1b: Eine weitere schematische Darstellung einer Logistikkette mit einer Verarbeitung durch ein Fördersystem, wobei eine Übergabe in Schalensorter erfolgt;

Fig. 2: Ein erfindungsgemässes Fördersystem in einer schematischen Seitensicht;

Fig. 3a-b: Fördervorrichtungen mit bezeichneten Fördergutstücken und Zuführstationen in einer schematischen Draufsicht;

Fig. 4a-b: Fördervorrichtungen mit Fördergutstücken in unterschiedlichen Ausrichtungen und Beanstandungen in einer schematischen Draufsicht;

Fig 4c: Eine Fördervorrichtung mit bezeichneten Fördergutstücken in unterschiedlichen Ausrichtungen und Beanstandungen in einer schematischen Draufsicht;

Fig 5a-d: Fördervorrichtungen mit einem Clustermodul und Fördergutstücken;

Fig. 6a-c: Ein Clustermodul in verschiedenen Ausrichtungen und in einer schematischen Perspektivansicht;

Fig. 7a: Eine Fördervorrichtung mit Fördergutstücken mit Ausrichtcodes in einer schematischen Draufsicht;

Fig. 7b: Eine Rolleneinheit mit Antrieb in einer schematischen Seitenansicht;

Fig. 7c: Eine Rolleneinheit in einer schematischen Draufsicht;

Fig. 7d: Eine Allseitenradclustereinheit in einer schematischen Seitenansicht;

Fig. 7e: Eine Allseitenradclustereinheit in einer schematischen Draufsicht;

Fig. 7f Eine angetriebene Allseitenradclustereinheit mit Antrieb in einer schematischen Seitenansicht;

Fig. 8a: Ein Clustermodul mit Rollenclustereinheiten in Ausrichtungen um verschiede Achsen in schematischer Perspektivansicht;

Fig. 8b: Ein Clustermodul mit erfindungsgemässen Kugelclustereinheiten in einer schematischen Draufsicht;

Fig. 8c: Eine angetriebene und gummierte Kugelclustereinheit mit Antrieb in einer schematischen Seitansicht;

Fig. 9a-b: Ein Clustermodul mit erfindungsgemässen Kugelclustereinheiten in einer schematischen Draufsicht, wobei die Richtung und Ausrichtung von Fördergut geändert wird.

Fig. 10a-b: Eine angetriebene, d.h. aktive und passive erfindungsgemässe Kugelclustereinheit in einer schematischen Seitensicht;

Fig. 10c: Ein Clustermodul bestehend aus erfindungsgemässen Kugelclustereinheiten in einer schematischen Draufsicht;

Fig. 11a-b: Ein Vektorfeld mit unterschiedlichen Strömungsrichtungen zur Veranschaulichung der Ansteuerung von Clustermodulen; und

Fig. 12: Eine schematische Darstellung eines Verfahrens zur Förderung und Anpassung der Ausrichtung sowie Beabstandung von Fördergütern.

Fig. 13: Eine Darstellung einer Abgabestation eines Hängeförderers, insbesondere eines Taschenhängeförderers, umfassend eine Fördervorrichtung mit Clustermodulen und verschiedenen Fördergutstücken.

**Ausführung der Erfindung**

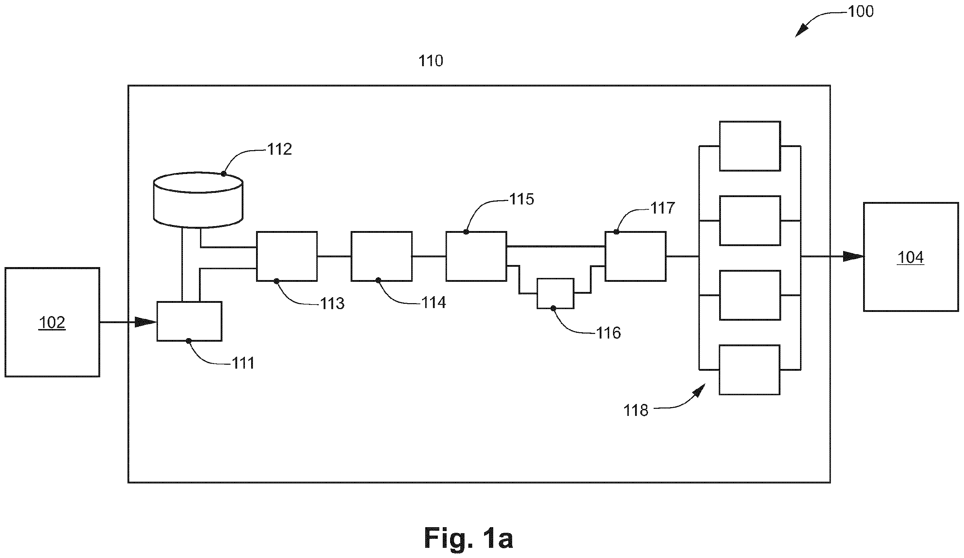

**Fig. 1a** zeigt eine schematische Darstellung einer Logistikkette 100 mit einer Verarbeitung 110 durch ein Fördergesamtsystem. Die Logistikkette 100 umfasst einen Speditionsantransport 102 und einen Speditionsabtransport 104. Die Verarbeitung 110 von Fördergütern erfolgt durch das Fördergesamtsystem und speziell durch ein erfindungsgemässes Fördersystem. Eingangsseitig erfolgt eine Anlieferung 111 bei eine gleichzeitig möglichen Speicherung 112. Danach erfolgt ein Fördern 113, das bevorzugt liegend durchgeführt wird. Anschliessend erfolgt ein Ausrichten und Identifizieren 114 der Fördergüter, wobei die Ausrichtung sowie eine Beabstandung der Fördergüter angepasst wird. Durch die Übergabe 115 an ein Transportelement, wie z.B. eine Fördertasche oder eine Hängefördertasche, erfolgt eine Weiterleitung der Fördergüter. Diese können in einem Puffer 116 zwischengespeichert oder direkt einer auftragsbezogenen Sortierung 117 zugeführt werden, bevor die Fördergüter entsprechende Abgabestellen oder Versandplätze 118 erreichen. Danach erfolgt dann der Speditionsabtransport 104.

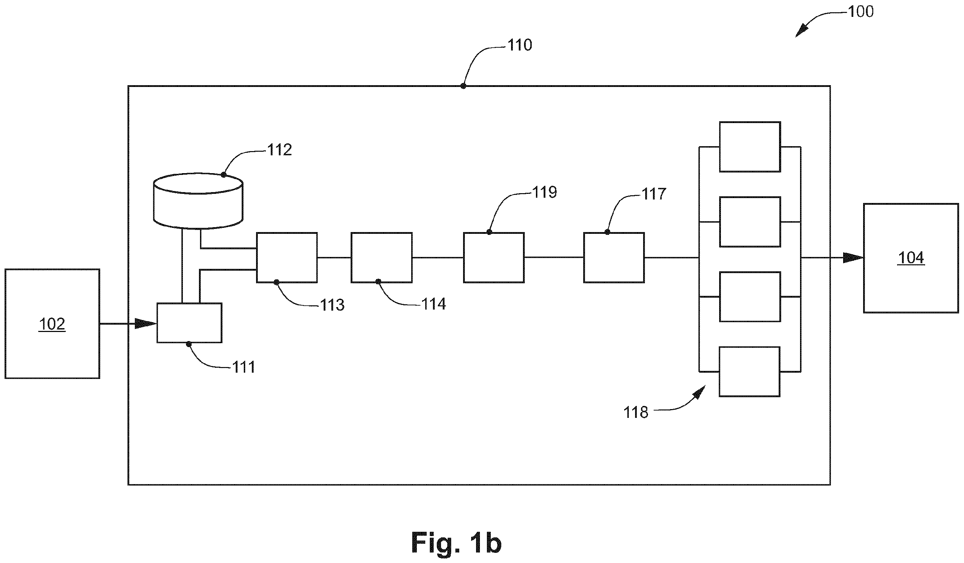

**Fig. 1b** zeigt ein weitere schematische Darstellung einer alternativen Logistikkette 100 mit einer Verarbeitung 110 durch ein Fördergesamtsystem. Die Logistikkette 100 umfasst wiederum einen Speditionsantransport 102 und einen Speditionsabtransport 104. Die Verarbeitung 110 von Fördergütern erfolgt durch das Fördergesamtsystem und insbesondere durch ein erfindungsgemässes Fördersystem. Eingangsseitig erfolgt eine Anlieferung 111 bei eine gleichzeitig möglichen Speicherung 112. Danach erfolgt ein Fördern 113, das bevorzugt liegend durchgeführt wird. Anschliessend erfolgt ein Ausrichten und Identifizieren 114 der Fördergüter, wobei die Ausrichtung sowie eine Beabstandung der Fördergüter angepasst wird. Durch die Übergabe 119 in einen Schalensorter erfolgt eine Weiterleitung der Fördergüter zu einer auftragsbezogenen Sortierung 117, bevor die Fördergüter entsprechende Abgabestellen oder Versandplätze 118 erreichen. Von dort erfolgt dann der Speditionsabtransport 104.

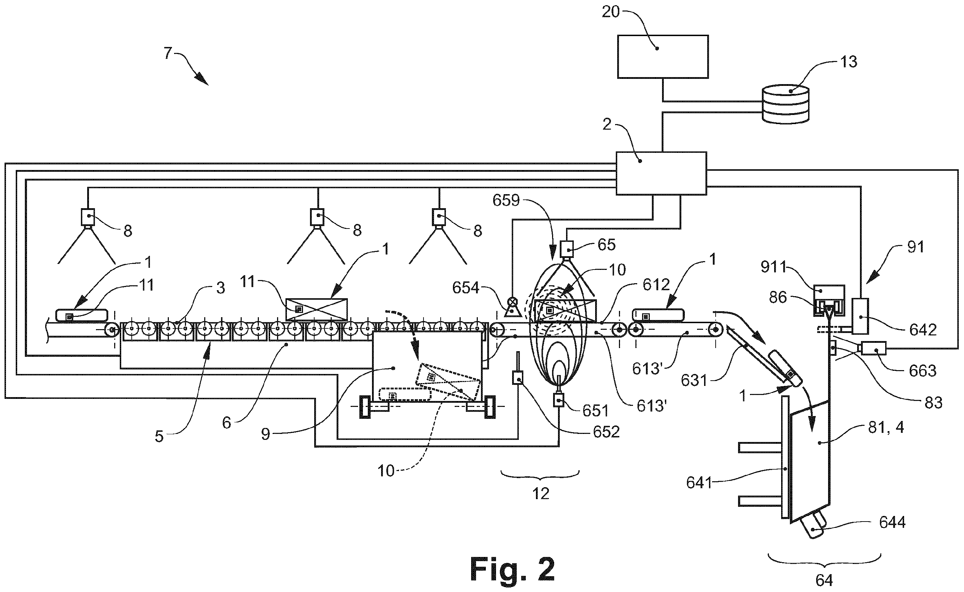

**Fig. 2** zeigt ein erfindungsgemässes Fördersystem 7 zum Einsatz in einer Logistikkette 100 in einer schematischen Seitensicht. Dargestellt sind Fördergüter 1 und spezielle Paketstücke 10, die sich auf einer Fördervorrichtung 6, insbesondere bestehend aus Clustermodulen 5 mit Clustereinheiten 3, befinden und von links nach rechts bewegt werden.

Fördergüter 1 können Waren, Pakete, Paketstücke 10, folierte Güter, Beutel, Säcke, Kisten, Briefe sowie sämtliche in der Logik zu befördernden Gegenstände sein.

Jedes Fördergut 1 und Paketstück 10 weist ein Identifikationsmittel 11 auf. In einer Staustation 9 befinden sich je ein Fördergut 1 und ein Paketstück 10. Mehrere Sensoreinheiten 8, die Kameras umfassen, sind über der Fördervorrichtung 6 installiert. Eine Identifikationsvorrichtung 12 mit mehreren Komponenten dient dem Lesen und Bestimmen der Identifikationsmittel 11 bevor die Fördergüter 1 und Paketstücke 10 über eine Schräge oder Rutsche 631 an Transportelemente 4, 81 wie z.B. Fördertaschen 81 weitergeleitet werden.

Die Sensoreinheiten 8 können mit Kameras ausgeführt sein, was jedoch kostspielig ist. Bei alternativen Ausführungsformen kann die Sensoreinheit 8 anstelle oder ergänzend einen Ultraschallsensor, eine Lichtschranke, einen RFID-Leser, einen QR-Code oder Barcode-Leser o.ä. enthalten.

Die Fördergüter 1, 10 werden von links in Förderrichtung F auf einen Bandförderer 612 gefördert. Im gezeigten Ausführungsbeispiel erfolgt die Zuführung über mindestens zwei Förderer für Liegewaren 613'. Durch gezieltes Anhalten, Bremsen und Anfahren dieser Förderer für Liegewaren 613' können Fördergüter 1, 10 zwischenparkiert werden, wodurch ein Pufferspeicher für Wareneinheiten realisiert werden kann.

Eine Lichtschrankenvorrichtung 654 quer zur Förderrichtung detektiert ein auf dem Bandförderer 612 ankommendes Paketstück 10. Unter Berücksichtigung der Fördergeschwindigkeit des Bandförderers 612 kann so der Standort des Paketstücks 10 auf dem Bandförderer 612 sowie die Längsausdehnung in Förderrichtung bestimmt werden. Dies erlaubt eine korrekte Positionierung des Paketstücks 10 an einer Identifikationsposition 659 eines ersten Identifikationsmoduls 65.

Die Identifikationsvorrichtung 12 kann als QR-Code oder RFID-Leseeinheit ausgeführt sein. Die RFID-Leseeinheit weist einen RF-Sender 651 und einen RF-Empfänger 652 auf, welche beide unterhalb dem Zuführmodul 61 angeordnet sind. In einer alternativen Ausführungsformen detektiert das Identifikationsmodul 65 ein Identifikationsmittel 11, das als Ausrichtungscode ausgeführt sein kann.

Die verschiedenen Komponenten, Untereinheiten und Module der Fördervorrichtung 7 sind mit einer Steuereinheit 2 und einer Rechnereinheit 13 verbunden. Die Rechnereinheit 13 ist mit einem übergeordneten Leitsystem 20 verbunden. Die Komponenten, Untereinheiten und Module der Fördervorrichtung 7 werden durch die Steuerungseinheit 2 gesteuert und übermitteln Daten an die Steuerungsvorrichtung 2 und Rechnereinheit 13. Die Steuereinheit 2 erhält Steuerbefehle vom Leitsystem 20. Die Rechnereinheit 13 weist eine Datenbank auf, auf welcher beispielsweise logischen Verknüpfungen zwischen Transportbehältern und Wareneinheiten gespeichert werden können. Basierend auf Messungen und/oder Dateneinlesung der Sensoreinheiten 8 und Auswertungen durch die Rechnereinheit 13 werden die Clustermodule 5 sowie Clustereinheiten 3 durch die Steuereinheit 2 derart angesteuert, dass eine gezielte Ausrichtung der Fördergüter 1 und Paketstücke 10 erfolgt und der Abstand zwischen benachbarten Fördergütern 1, 10 optimiert anpasst wird.

Das Fördergut 1 gelangt anschliessend über die Rutsche 631 gleitend in eine Hängefördertasche 81 eines Hängefördersystems 91. Die Schweizer Patentanmeldung CH001030/2022 offenbart eine Vorrichtungen und Verfahren zum Beladen von Hängefördertaschen.

In einer besonderen Ausführungsform kann das Identifikationsmittel 11 des Förderguts 1, 10 mit einem Datenelement 83 des Transportelements 4, 81 verknüpft werden. Der Fachmann versteht dies auch als «verheiraten». Eine spätere einfache Auflösung und Separierung des Förderguts 1, 10 vom Transportelement 4, 81 wird dadurch ermöglicht.

Die Hängefördertasche 81 wird durch ein Bereitstellungsmodul 64 von einem geschlossenen Zustand (nicht dargestellt) in einen geöffneten Befüllungszustand überführt. Während eine leere Hängefördertasche 81, bereits in der für die Befüllung vorgesehenen Orientierung, an einer Laufschiene 911 hängend herangefördert wird, wird der Boden der Hängefördertasche durch eine Abfolge von rollenförmigen Aktuatoren 642 angehoben, wodurch die Hängefördertasche geöffnet wird. Die Aktuatoren 642 bewirken ein Stoppen und Freigeben. Ein seitlicher Anschlag 641 stabilisiert die Hängefördertasche horizontal, quer zur Förderrichtung des Hängefördersystems. Die Hängefördertasche wird angehalten und mittels eines weiteren Stoppelements in Bezug auf die Laufschiene 911 fixiert. Die Hängefördertasche ist nun im Befüllungszustand. Das Fördergut 1, 10 kann in die Hängefördertasche 81 eingebracht werden. Nach dem Befüllen gibt das Stoppelement die Hängefördertasche 81 wieder frei. Die befüllte Hängefördertasche 81 wird im Hängefördersystem 91 weitergefördert, und die nächste, leere Hängefördertasche zum Befüllen herangeführt.

Die Hängefördertasche 81 wird durch eine entlang des Förderpfads des Hängefördersystems angeordnete Führungsschiene 644 in die geöffnete Stellung gebracht. Die an einem Laufwagen 86 aufgehängte Transporttasche der Hängefördertasche 81 weist an einem obere Ende ein auslesbares Datenelement 83 auf, welches eine Identifikation der Hängefördertasche 81 erlaubt. Im gezeigten Beispiel ist das Datenelement als optisch auslesbares Datenelement, zum Beispiel als Barcode oder QR-Code ausgestaltet. Dieses Transportbehälter-Datenelement 83 kann durch eine optische Leseeinheit 663 ausgelesen werden. Alternativ kann das Datenelement 83 auch als RFID-Element realisiert sein, welches durch eine RFID-Leseeinheit ausgelesen werden kann.

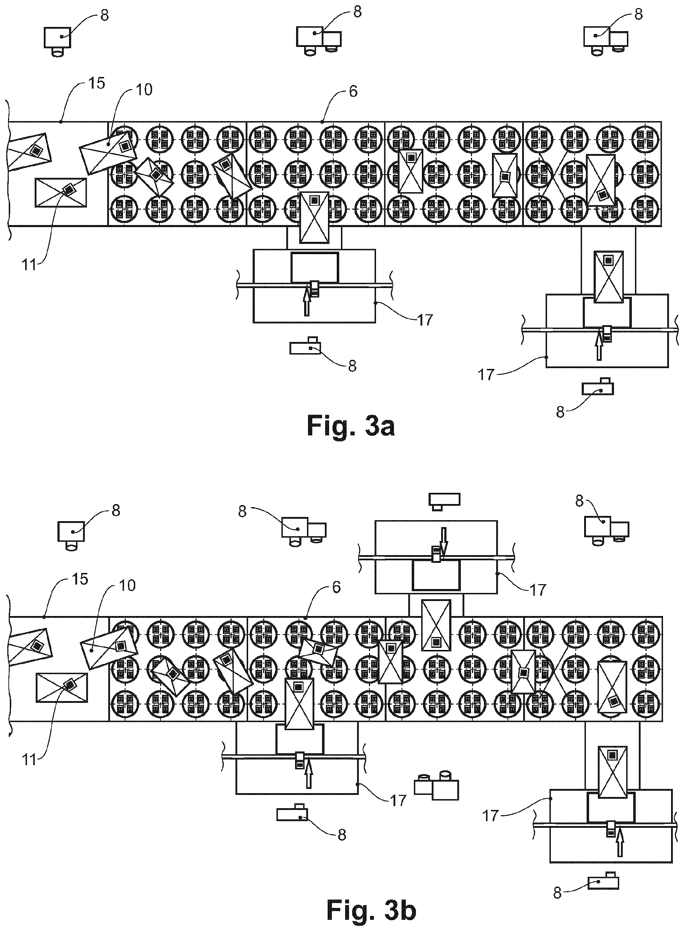

Die **Fig. 3a-b** zeigen Fördervorrichtungen mit bezeichneten Fördergutstücken in einer schematischen Draufsicht.

**Fig. 3a** zeigt eine Fördervorrichtung 6 mit Paketstücken 10, einer Zuführstation 15 und zwei Übergabestellen oder Übergabestationen 17 an ein Hängefördersystem, die auf der gleichen Seite angeordnet sind. Über der Fördervorrichtung 6 sind Sensoreinheiten 8 in Form von Kameras angeordnet. Die Übergabestationen 17 unterscheiden sich durch die Beabstandung von der Fördervorrichtung 6.

**Fig. 3b** zeigt eine Fördervorrichtung 6 ebenfalls mit Paketstücken 10, einer Zuführstation 15 und drei Übergabestationen 17, wobei sich zwei auf der gleichen Seite befinden und eine weitere Übergabestation 17 aus Platzgründen auf der anderen Seite der Fördervorrichtung 6 angeordnet ist. Durch eine entsprechende Anordnung der Übergabestation 17 lassen sich Logistikvorteile erzielen. Die Weiterförderung kann liegend und/oder hängend erfolgen.

Die Zuführstation 15 kann Fördergüter 1 oder Waren liegend zuführen (z.B. mit einem Bandförderer) oder auch hängend mit einem Taschen- oder Hängeförderer.

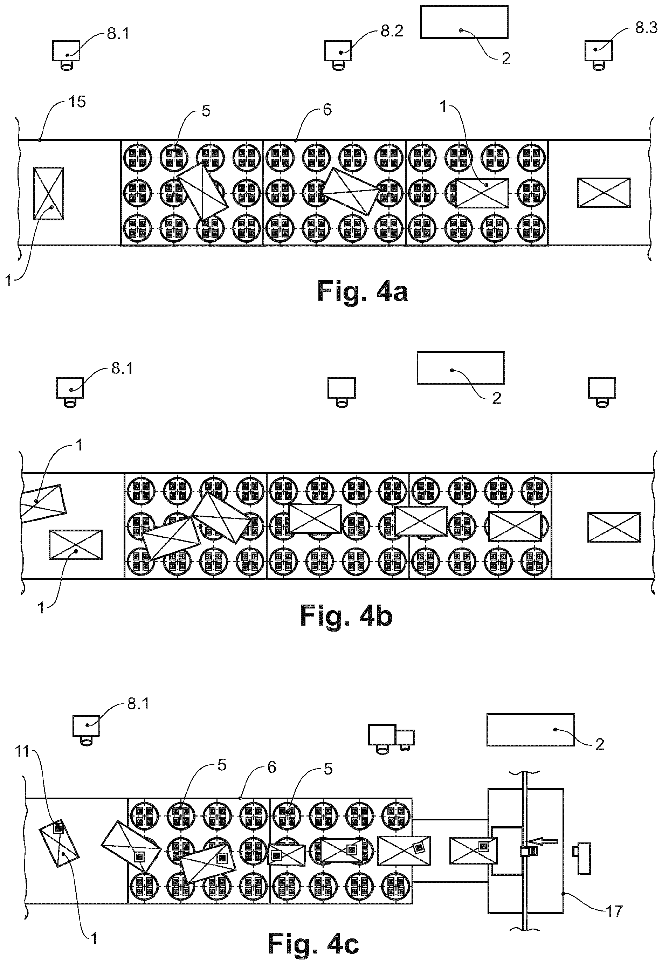

Die **Fig. 4a-c** illustrieren Fördervorrichtungen mit Fördergutstücken in unterschiedlichen Ausrichtungen und Beanstandungen in einer schematischen Draufsicht.

**Fig. 4a** zeigt eine Fördervorrichtung 6 mit Clustermodulen 5. Zwölf Clustermodule 5 bilden hier eine Einheit, wobei drei Einheiten hintereinander angeordnet sind. Sensoreinheiten 8 mit Kameras befinden sich über der Fördervorrichtung 6 sowie eine Steuereinheit 2 ermöglicht die Ausrichtung der Fördergüter 1. Die Steuereinheit 2 ist mit dem Leitsystem 20 verbunden (nicht dargestellt). Auf der linken Seite detektiert über der Zuführstation 15 eine erste Kamera 8.1 ein Fördergut 1 orthogonal zur Förderrichtung. In einer ersten Einheit der Fördervorrichtung 6 wird das Fördergut 1 leicht ausgerichtet und im zweiten Abschnitt von einer zweiten Kamera 8.2 nochmals überprüft, bevor das Fördergut 1 in einem dritten Abschnitt mittels einer dritten Einheit der Fördervorrichtung 6 parallel und längs zur Förderrichtung ausgerichtet wird. Eine dritte Kamera 8.3 überprüft auf der rechten Seite die korrekte Ausrichtung des Förderguts 1 an einer Entnahmestelle oder einem Übergabetisch.

In **Fig. 4b** laufen zwei Fördergüter 1 fast parallel in die erste Einheit der Fördervorrichtung 6 ein. Diese sind nun auszurichten und in eine Reihenfolge zu bringen. Nach der Detektion durch die erste Kamera 8.1 werden die zwei Fördergüter 1 in der ersten Einheit der Fördervorrichtung 6 in eine Reihenfolge gebracht, wobei ein Fördergut 1 leicht verzögert oder gebremst wird und eine Ausrichtung erfolgt.

**Fig. 4c** zeigt eine Fördervorrichtung 6 mit bezeichneten Fördergutstücken in unterschiedlichen Ausrichtungen und Beabstandungen in einer schematischen Draufsicht. Die Fördervorrichtung 6 weist zwei Einheiten von Clustermodulen 5 mit insgesamt vierundzwanzig Clustermodulen 5 auf. Die erste Kamera 8.1 stellt die Lage des Förderguts 1 fest, so dass mittels der zwei Einheiten von Clustermodulen 5 eine Ausrichtung erfolgen kann, bevor das Fördergut 1 einer Übergabestation 17 zum Hängefördersystem 91 zugeführt wird. Ein Stoppelement ist an der Übergabestation 17 beim Pfeil angeordnet. Das Fördergut 1 wird schliesslich einer geöffneten Tasche zugeführt. Die Fördergüter 1 weisen ein Identifikationsmittel 11 auf. Das Identifikationsmittel 11 kann als QR-Code ausgeführt sein, um eine einfache und schnelle Zuordnung und Identifikation vorzusehen. Alternativ und ergänzend kann ein RFID-Code, Barcode, o.ä. vorgesehen werden.

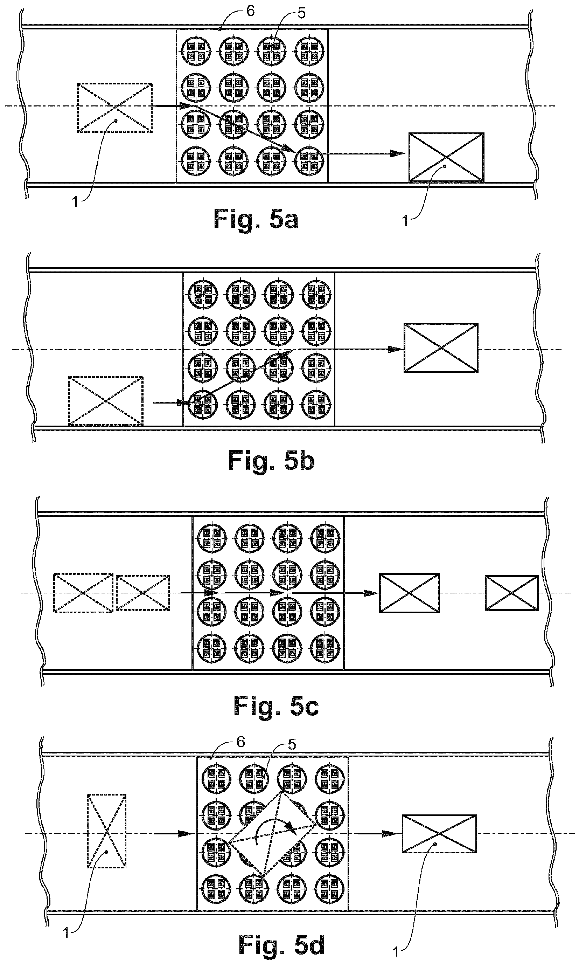

Die **Fig. 5a-d** zeigen eine Fördervorrichtung 6 mit sechzehn Clustermodulen 5 als eine Einheit. Dargestellt sind verschiedene Funktionalitäten der Fördervorrichtung 6. Fördergutstücke 1 werden mittels Fördervorrichtung 6 ausgerichtet, bewegt, versetzt, beabstandet und gedreht.

Die Schweizer Patentanmeldung CH000788/2022 vom 29.06.2022 offenbart eine Förderanlage mit einer Vorrichtung zum Lenken von liegend geförderten Fördergütern.

In **Fig. 5a** wird ein mittiges Fördergut 1 schräg nach vorn bewegt, sodass dieses seitlich bewegt bzw. versetzt wird.

In **Fig. 5b** wird ein seitliches Fördergut 1 schräg nach vorn derart bewegt, sodass dieses mittig weiter transportiert werden kann.

In **Fig. 5c** werden zwei dicht beieinander befindliche Fördergüter 1 in einen definierten Abstand gebracht. Dies geschieht, indem ein Fördergut 1 weiter transportiert wird, während das andere Fördergut in der Vorwärtsbewegung verzögert wird.

In **Fig. 5c** ist dargestellt, wie ein orthogonal zur Förderrichtung ausgerichtetes Fördergut um ca. 90° mittels Clustermodulen 5 der Fördervorrichtung 6 gedreht wird, um dann längs zur Förderrichtung weiter transportiert zu werden.

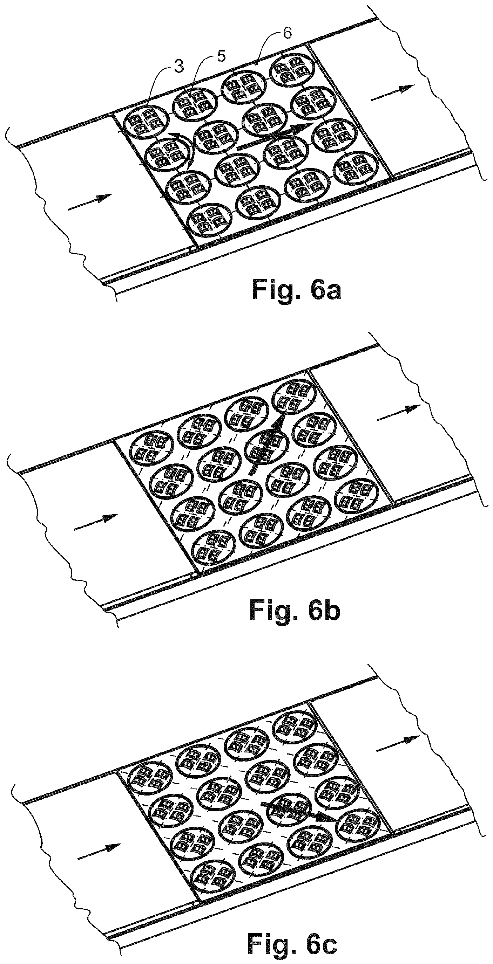

Die **Fig. 6a-c** zeigen eine Fördervorrichtung 6 mit sechzehn Clustermodulen 5 und verschiedene Antriebsmöglichkeiten bzw. Richtungen. Je nach Aufgabenstellung können mehr oder weniger Clustermodule 5 angeordnet und angesteuert sein. Jedes Clustermodul 5 weist mehrere Clustereinheiten 3 auf. Zudem ist jedes Clustermodul 5 in der Ebene drehbar.

In **Fig. 6a** sind alle Clustereinheiten 3 der Clustermodule 5 in Förderrichtung ausgerichtet.

In **Fig. 6b** sind die Clustermodule 5 mit den Clustereinheiten 3 um ca. 45° in eine Richtung versetzt ausgerichtet.

In **Fig. 6c** sind die Clustermodule 5 mit den Clustereinheiten 3 um ca. 45° in die andere Richtung versetzt ausgerichtet.

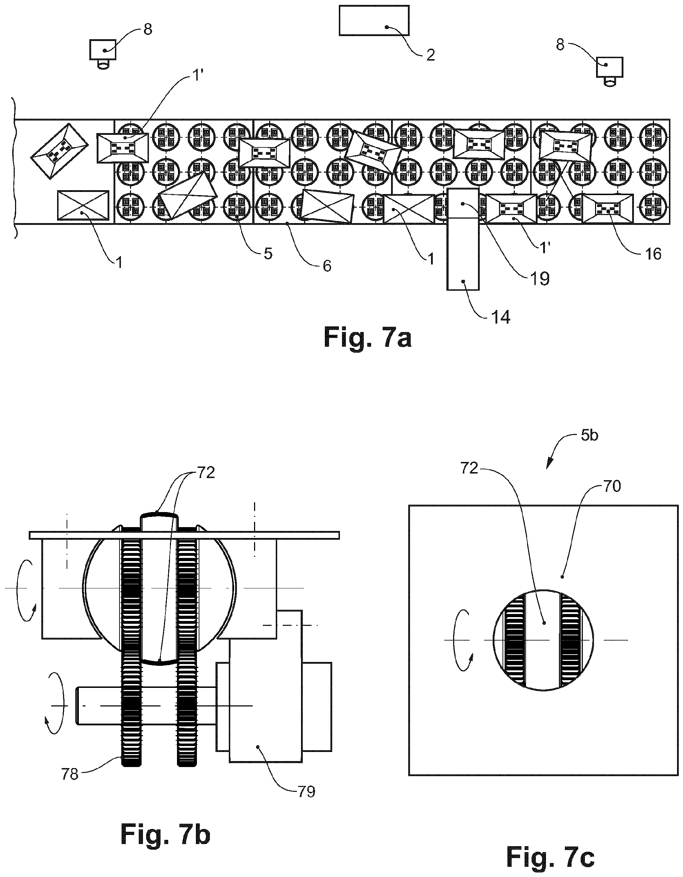

**Fig. 7a** zeigt eine Fördervorrichtung 6 mit Fördergutstücken 1 und einem Identifikationsmittel 11 sowie einem Ausrichtcode 16 in einer schematischen Draufsicht. Auf der Fördervorrichtung 6 werden Fördergutstücke 1 zu einem Druckkopf 19 bewegt. Mittels Sensoreinheit 8 und Steuerungseinheit 2 werden die Fördergutstücke 1 ohne Identifikationsmittel 11, Ausrichtungsetikett oder Ausrichtcode 16 einer Markierungsvorrichtung 14 zugeführt. Ein Druckkopf 19 der Markierungsvorrichtung 14 druckt Identifikationsmittel 11 und/oder Ausrichtcodes 16 auf die Fördergutstücke 1.

Diese werden dann weiterbewegt und laufen auf der anderen Seite zurück als Fördergutstücke 1' mit Identifikationsmittel 11 und Ausrichtcode 16. Die Sensoreinheiten 8 überwachen die Fördergutstücke 1, 1'. Die Lage und Ausrichtung eines Fördergutstücks 1 ist als Ausrichtung seiner Aussenhülle und/oder Ausrichtung des Ausrichtungscodes 16 mittels der Sensoreinheit 8 erfassbar und kann mittels Clustermodule 5 korrigiert werden. Die Position eines Fördergutstücks 1 ist als die Position einer Aussenhülle des Fördergutstücks 1 und/oder Position des Ausrichtungscodes 16 mittels der Sensoreinheit 8 erfassbar.

**Fig. 7b** zeigt eine Rollenclustereinheit 70 eines Rollenclustermoduls 5b in einer schematischen Seitenansicht mit Antriebselementen. Eine Rolle 72 ist auf der Oberfläche gummiert bzw. beschichtet. Die Beschichtung ist vorzugsweise adhäsiv ausgeführt, damit ein griffiger und gesicherter Transport der Fördergüter 1 erfolgen kann. In einer bevorzugten Ausführungsform ist die Beschichtung so gewählt, dass eine gute Haftung sowie Griffigkeit der Fördergüter 1 gewährleistet wird. Die Rollenclustereinheit 70 wird durch Zahnräder 78 oder alternativ Riemenelemente angetrieben. Als Antrieb dient ein Elektroantrieb 79, beispielsweise-se kann es sich um einen Servomotor oder Schrittmotor handeln. Der Elektroantrieb 79des Rollenclustermoduls 5b kann in beide Richtungen erfolgen, so dass die Rolle 72 links und rechtsherum dreht und stoppt, was für eine Bremswirkung wichtig sein kann.

**Fig. 7c** zeigt die Rollenclustereinheit 70 von Fig. 7b in einer schematischen Draufsicht. Die beschichtete Rolle 72 kann sich um zwei Achsen drehen und ermöglicht somit eine Fort- bzw. Förderbewegung der Fördergüter 1 in alle Richtungen einer Ebene.

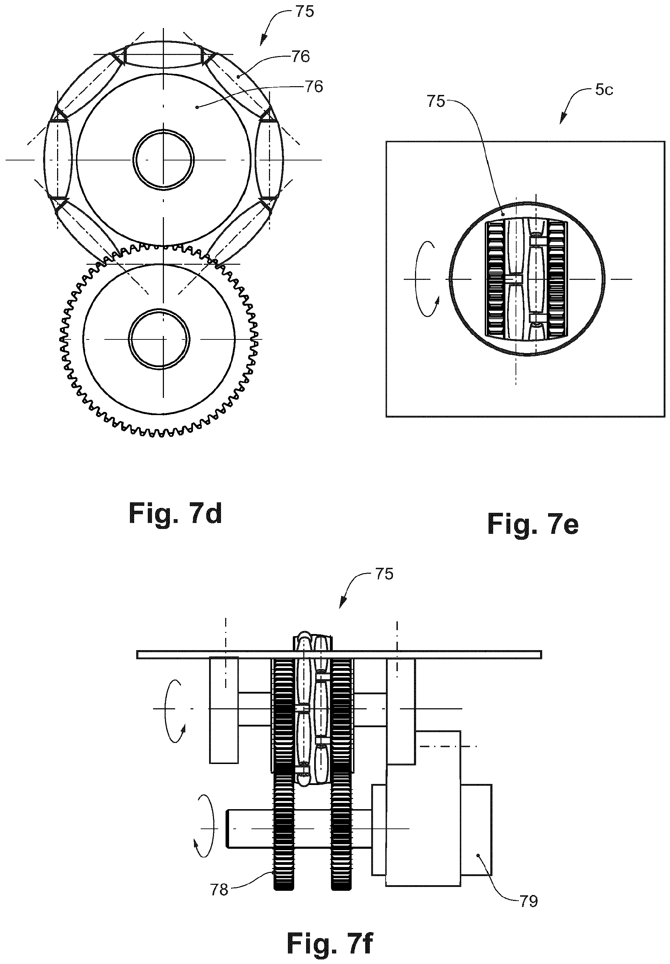

**Fig. 7d** illustriert eine Allseitenradclustereinheit 75 mit einer Vielzahl von Rollenblöcken 76, die in einem bestimmten Winkel, beispielsweise 90° zum Hauptradeinheit 77 angebracht sind, so dass es sich in jede Richtung, auch seitwärts, bewegen kann, ohne dass komplexe Lenkmechanismen erforderlich sind.

**Fig. 7e** illustriert die Allseitenradclustereinheit 75, die sich um zwei Achsen drehen kann. Darüber hinaus können sich einzelne Rollenblöcke 76 um eine Achse drehen. All dies ermöglicht eine hohe Flexibilität bei der Bewegung und dem Transport von Fördergütern 1 in der Fördervorrichtung 6. Alternativ oder ergänzend kann sich die Allseitenradclustereinheit 75 um mindestens zwei Achsen drehen. Das sorgt für mehr Stabilität und Gleichgewicht, insbesondere beim Tragen schwerer Fördergüter 1. Die Fähigkeit, sich um mehrere Achsen zu drehen, trägt dazu bei, das Gewicht der Fördergüter 1 gleichmässiger zu verteilen, wodurch die Gefahr des Kippens oder des Ungleichgewichts verringert wird.

**Fig. 7f** veranschaulicht die Allseitenradclustereinheit 75, die durch Zahnräder 78 oder mittels Riemenelement(e) angetrieben wird. Als Antrieb dient ein Elektroantrieb 79, beispielsweise kann es sich um einen Schrittmotor handeln. Die Zahnräder 78 oder Riemenelemente übertragen die Kraft des Elektroantriebs 79 auf die Allseitenradclustereinheit 75, die aus mehreren drehbaren Rollenblöcken 76 besteht. Diese Rollenblöcke 76 sind so angeordnet, dass sie sich in alle Richtungen drehen können und somit eine optimale Manövrierfähigkeit der Allseitenradclustereinheit 75 gewährleisten.

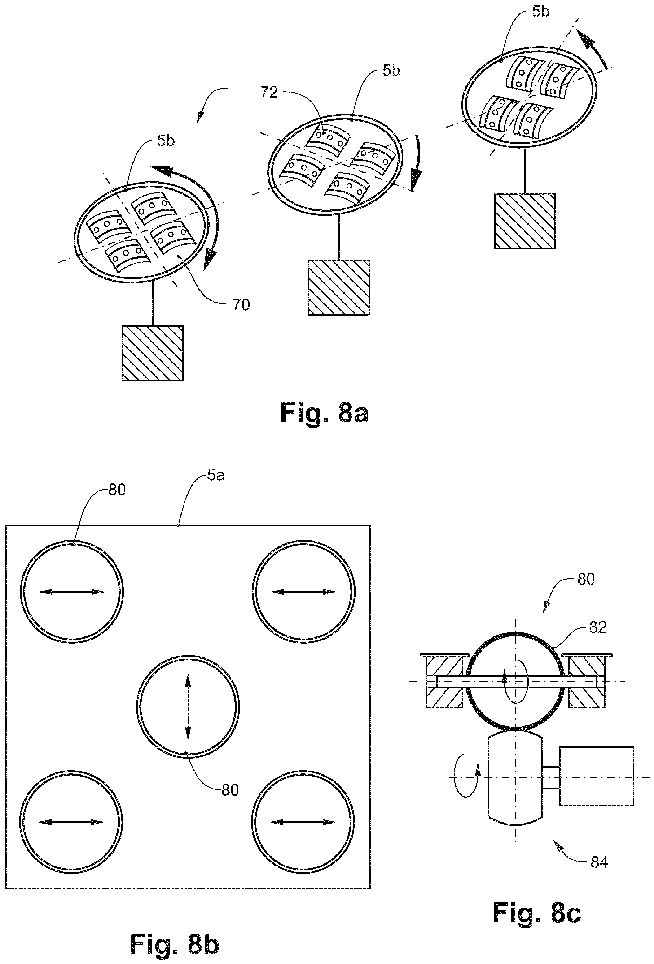

In **Fig. 8a** ist ein Rollenclustermodul 5b mit Rollenclustereinheiten 70 in verschieden Ausrichtungen in schematischer Perspektivansicht dargestellt. Das Rollenclustermodul 5b umfasst vier Rollenclustereinheiten 70 mit Rollen 72. Dargestellt ist die Schwenkbarkeit bzw. Ausrichtung des Rollenclustermoduls 5b um 90° und 45° zu jeder Seite. Die Ausrichtung des Rollenclustermoduls 5b kann mit jedem beliebigen Winkel erfolgen, was dem Fördersystem eine hohe Flexibilität verleiht.

In **Fig. 8b** ist ein Kugelclustermodul 5a mit erfindungsgemässen Kugelclustereinheiten 80 in einer schematischen Draufsicht dargestellt. Gezeigt ist ein Kugelclustermodul 5a mit fünf Kugelclustereinheiten 80 wobei vier in die gleiche Richtung fördern bzw. drehen und eine mittig angeordnete Kugelclustereinheit 80 orthogonal dreht. Dies kann zur Geschwindigkeitsreduktion genutzt werden. Die Anzahl der Kugelclustereinheiten 80 in einem Kugelclustermodul 5a kann unterschiedlich sein und ist den Förderaufgaben anzupassen.

**Fig. 8c** zeigt eine angetriebene und gummierte Kugelclustereinheit 80 in einer schematischen Seitansicht. Die Oberfläche einer Kugel 82 ist hier gummiert bzw. beschichtet. Die Beschichtung kann vorzugsweise adhäsiv ausgeführt damit ein griffiger und gesicherter Transport der Fördergüter 1 erfolgen kann. Die Beschichtung ist so gewählt, dass eine gute Haftung sowie Griffigkeit der Fördergüter 1 gewährleistet wird. Die Kugel 82 wird mittels Kugelantrieb 84 angetrieben, der schwenkbar ausgeführt sein kann.

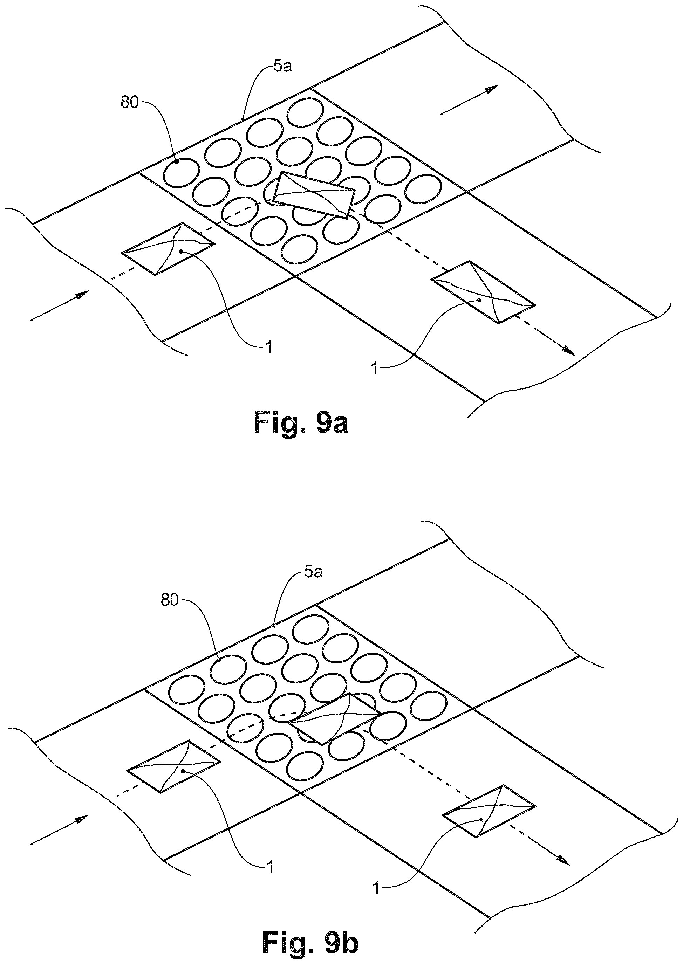

**Fig. 9a-b** zeigen ein Kugelclustermodul 5a mit erfindungsgemässen Kugelclustereinheiten 80 in einer schematischen Draufsicht, wobei die Richtung und Ausrichtung von Fördergut 1 geändert wird. Die kann beispielsweise einem Ausschleusen von Fördergut 1 dienen.

In **Fig. 9a** wird ein Fördergut 1 auf dem Kugelclustermodul 5a um ca. 90° gedreht bzw. geschwenkt und dann in Längsrichtung weiterbefördert.

In **Fig. 9b** wird ein Fördergut 1 um ca. 90° in Querrichtung mittels Kugelclustermodul 5a weiterbefördert.

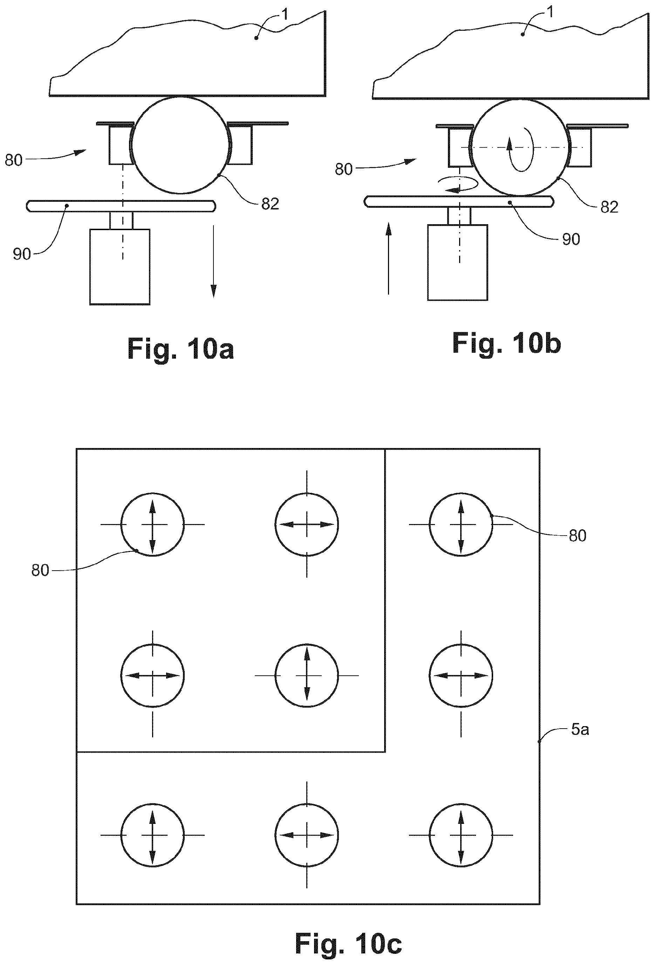

**Fig. 10a-b** zeigen eine angetriebene aktive und passive erfindungsgemässe Kugelclustereinheit 80 in einer schematischen Seitensicht. Beim Antreiben wird eine Antriebsscheibe 90 gegen die Kugel 82 gedrückt und treibt das Fördergut 1 an.

**Fig. 10a** zeigt den Freilauf der Kugel 82, wobei die Antriebsscheibe 90 die Kugel 82 nicht berührt.

**Fig. 10b** zeigt die Kugelclustereinheit 80 mit angetriebener Kugel 82, wobei die Kugel 82 in Kontakt mit der rotierenden Antriebsscheibe 90 ist. Wird die Kugel nicht angetrieben, fällt die Antriebsscheibe 90 herunter und die Kugel 82 ist im Freilaufmodus. Die Oberfläche der Kugel 82 ist vorzugsweise auf die Oberfläche der Antriebsscheibe 90 abgestimmt, sodass ein griffiger Antrieb erfolgt.

In **Fig. 10c** ist ein Kugelclustermodul 5a bestehend aus erfindungsgemässen Kugelclustereinheiten 80 in einer schematischen Draufsicht dargestellt. Vier Kugelclustereinheiten 80 oder neun Kugelclustereinheiten 80 bilden eine Antriebseinheit. Jede Kugelclustereinheit 80 ist von der Steuereinheit 2 individual ansteuerbar. Die Kugelclustereinheiten 80 können auch untereinander so verknüpft sein, dass keine Steuerbefehle der Steuereinheit 2 notwendig sind. Pro Kugelclustereinheit 80 kann ein Kontaktsensor angeordnet sein. Dieser kann z.B. als Gewichts-, Ultraschall- oder Detektionssensor ausgestaltet sein.

Sobald ein Sensor einer Kugelclustereinheiten 80 ein Fördergut 1 detektiert, kann die Information an die nächste oder benachbarte Kugelclustereinheit 80 weitergegeben werden, dies alles ohne Steuereinheit 2. Dadurch kann eine Art Wellenbewegung ähnlich einer La-Ola-Welle durchgeführt werden. Die Clustermodule 5, 5a, 5b und zugehörige Clustereinheiten können nahezu passiv ausgeführt werden.

Dies wäre vorteilhaft für die Energieeffizienz. Somit würde eine Clustereinheit nur antreiben oder einen kurzen Drall verursachen, wenn von einer benachbarten Clustereinheit bzw. dessen Sensor ein Fördergut 1 detektiert bzw. bemerkt wird. Beispielswiese kann die Information als Informationswelle jeder zweiten, dritten usw. Clustereinheit weitegegeben werden, um gewisse Muster oder Vektorfelder zu erzeugen.

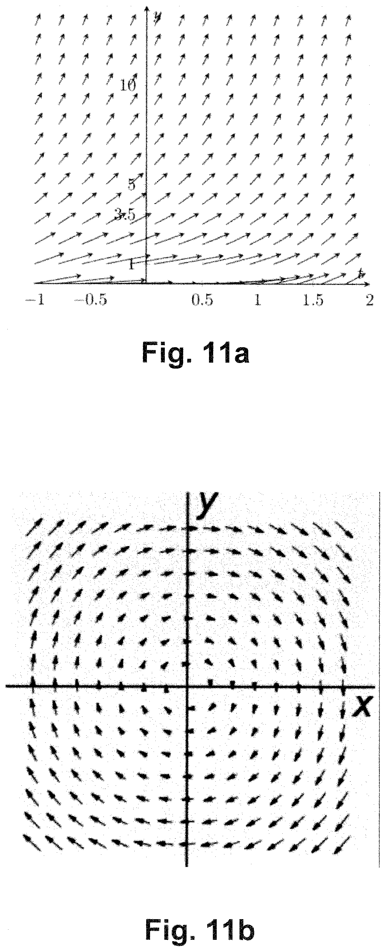

Fig. **11a-b** zeigen ein Vektorfeld mit unterschiedlichen Strömungsrichtungen zur Veranschaulichung der Ansteuerung der Clustermodule 5, 5a, 5b und Clustereinheiten 3, 70, 80.

Fig. **11a** zeigt eine Richtungsänderung wohingegen in Fig. **11b** eine Rotation erfolgt.

Ein Vektorfeld wird als Gradientenfeld bezeichnet, wenn es eine differenzierbare Funktion gibt. Ein zweidimensionales Vektorfeld g kann wie folgt beschrieben werden:

$$g(x, y) = 2(x, -y) \quad \text{für alle } (x, y) \in \mathbb{R}^2$$

Dieses Vektorfeld ist das Gradientenfeld der Funktion $f: \mathbb{R}^2 \to \mathbb{R}$ mit

$$f(x, y) = x^2 - y^2 \quad \text{für alle } (x, y) \in \mathbb{R}^2.$$

Anders beschrieben ist das Vektorfeld eine mathematische Darstellung eines physikalischen Feldes, das an jedem Punkt im Raum Grösse und Richtung hat. In diesem Fall wird ein Vektorfeld zur Modellierung der Bewegung der Fördergüter 1 verwendet, um die Ansteuerung der Clustermodule 5, 5a, 5b, 5c und der Clustereinheiten 3, 70, 75, 80 zu optimieren.

Durch den Einsatz von Technologien der künstlichen Intelligenz (KI), wie maschinelles Lernen und neuronale Netze, kann das Vektorfeld derart optimiert werden, um die Richtung des Fördergutflusses zu verbessern. Ein KI-System kann lernen, wie man die Clustermodule 5, 5a, 5b, 5c und Clustereinheiten 3, 70, 75, 80 am besten bewegt, um einen optimalen Fluss zu gewährleisten. Dabei können diese verschiedene Prozessparameter berücksichtigen, z. B. das Gewicht, Geschwindigkeit, Lage und Ausrichtung des hinaus kann auch die Beabstandung des Förderguts 1 zu anderen Fördergütern 1 berücksichtigt werden, um den Durchfluss und die Kapazität zu erhöhen. Schliesslich sollte auch die Art der Clustermodule 5, 5a, 5b, 5c und der Clustereinheiten 3, 70, 75, 80 berücksichtigt werden, z. B. ob eine Kugelgeometrie oder eine Allseitenradgeometrie verwendet wurde.

Um das Vektorfeld zu optimieren, sollte das KI-System mit Prozessdaten trainiert werden, die verschiedene Prozessparameter und Bedingungen berücksichtigen. Dadurch wird das System robuster und in verschieden Szenarien zuverlässig anwendbar. Danach kann das KI-System in der Lage sein, verschiedene Muster und Trends zu erkennen und Vorhersagen darüber zu treffen, wie die Strömungsrichtungen der Fördergüter 1 am besten angepasst werden sollten. Für die Prozessdatensammlung können verschiedene Sensoren eingesetzt werden wie beispielsweise Kameras, Ultraschallsensoren oder Laserscanner, um wichtige Informationen über die Position, Bewegung und Ausrichtung der Fördergüter 1 zu erfassen.

Das KI-System kann sowohl offline als auch online eingesetzt werden. Das bedeutet, dass es nicht nur für die Offline-Optimierung der Strömungsrichtungen der Fördergüter 1 eingesetzt werden kann, sondern auch für Prozessänderungen in Echtzeit. Durch die kontinuierliche Optimierung des Vektorfeldes in Echtzeit kann das KI-System auf Änderungen in der Anzahl, Position und anderen Prozessparametern der Fördergüter 1 reagieren und die Bewegung der Clustermodule 5, 5a, 5b,5c und der Clustereinheiten 3, 70, 75, 80 anpassen, um den optimalen Fördergutfluss aufrechtzuerhalten und die Kapazität des Durchflusses zu erhöhen.

Vorteilhaft ist es die Menge von Prozessdaten nicht direkt an das Leitsystem 20 zu übermitteln, um den Datenverkehr nicht zu überlasten bzw. gering zu halten. Daher ist die Verarbeitung durch eine oder mehrere lokale Rechnereinheiten 13 bevorzugt.

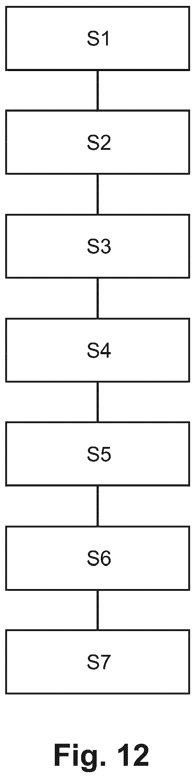

Fig. **12** zeigt eine schematische Darstellung eines Verfahrens zur Förderung und Anpassung der Lage sowie Beabstandung von Fördergütern 1. In einem ersten Schritt S1 erfolgt ein Erfassen der Lage eines Förderguts 1. Alternativ oder ergänzend wird in einem zweiten Schritt S2 die Position des Förderguts 1 erfasst. Die Schritte S1 und S2 können gleichzeitig oder nahezu gleichzeitig ausgeführt werden. In einem dritten Schritt S3 erfolgt ein Bestimmen der Ausrichtung des Förderguts 1 durch eine Rechnereinheit 13. Alternativ oder ergänzend wird in einem vierten Schritt S4 eine Beabstandung zwischen benachbarten Fördergütern 1 durch eine Rechnereinheit 13 bestimmt oder berechnet. Auch die Schritte S3 und S4 können gleichzeitig oder nahezu gleichzeitig ausgeführt werden. In einem Schritt S5 erfolgt eine Anpassung der Ausrichtung des Förderguts 1 durch ein von einer Steuerungseinheit 2 gesteuertes Clustermodul 5, 5a, 5b mit einer Clustereinheit 3, 70, 80. Alternativ oder ergänzend wird in einem sechsten Schritt S6 die Beabstandung zwischen benachbarten Fördergütern 1 durch ein von der Steuerungseinheit 2 gesteuertes Clustermodul 5, 5a, 5b angepasst. Dies erfolgt mittels Clustereinheiten 3, 70, 80, die um mindestens eine ihrer Achsen mittels eines Antriebs gedreht werden. Die Schritte S5 und S6 können ebenfalls gleichzeitig oder nahezu gleichzeitig ausgeführt werden. In einem siebten Schritt S7 erfolgt die Beladung eines Transportelements 4, z.B. einer Hängefördertasche 81, mit dem Fördergut 1 oder mehreren Fördergütern 1.

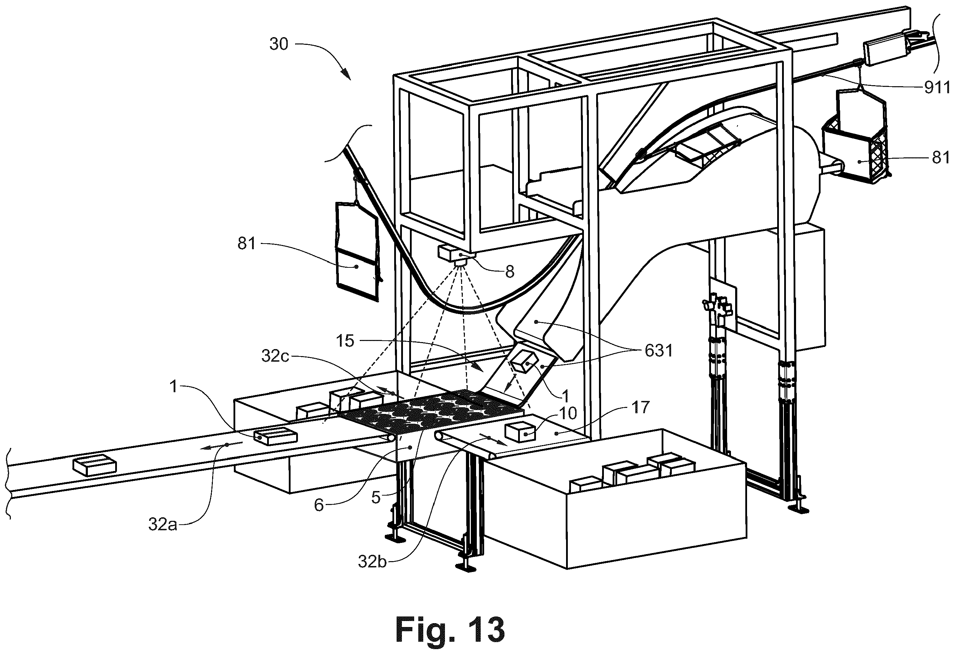

**Fig. 13** zeigt eine Darstellung einer Abgabestation 30 eines Hängeförderers, insbesondere eines Taschenhängeförderers, umfassend eine Fördervorrichtung 6 mit Clustermodulen 5 und Fördergut 1, 10. Die Clustermodule 5, auch Ausrichtemodule genannt, der Fördervorrichtung 6 sind direkt hinter einer Schräge oder Rutsche 631 der Abgabestation platziert. Die Rusche 631 führt zu den Clustermodulen 5 über denen eine Kamera 8 zur Lageerfassung angeordnet ist. Das Fördergut 1 und Paketstücke 10, also Artikel wie zum Beispiel Stückgut, erhalten nach der Abgabe aus einer Tasche 81 auf der Rutsche 631 einen Drehimpuls, was dazu führt, dass die abgegebenen Artikel eine beliebige Orientierung erhalten. Durch die Neigung und/oder Seitenbegrenzungen der Rutsche 631 kann der Drehimpuls beeinflusst werden.

Durch die nachfolgende Fördervorrichtung 6 mit den Clustermodulen 5 kann das Fördergut 1 wieder eine «neue» Ausrichtung erhalten, wobei diese «neue» Ausrichtung hilft eine nachfolgende Weiterverarbeitung durchzuführen.

Alternativ oder ergänzend kann die Ausrichtung oder Korrektur des Förderguts 1 und/ oder Paketstücke 10 auch später in der Weiterverarbeitung erfolgen.

Ausserdem kann die Fördervorrichtung 6 mit den Clustermodulen 5 eingesetzt werden, um die ankommenden Fördergüter 1, 10 auf verschiedene Förderwege 32a, 32b, 32c zu verteilen, also eine Funktion wie eine Weiche. Die Fördergüter 1 können, wie dargestellt, geradeaus 32a, nach links 32b oder nach rechts 32c befördert werden. Eine genaue Ausrichtung kann zudem mittels der Clustermodule 5 erfolgen.

Der Vorteil der schnellen Abgabestation kann mit den schnellen Clustermodulen 5 als Weichen kombiniert werden. So können die Fördergüter 1 und Pakete 10 schnell und präzise für die Weiterverarbeitung, wie zum Beispiel das Kommissionieren oder das Verpacken, verteilt werden.

Das folgende Liste zeigt bevorzugte Ausführungsformen und Aspekte gemäss der vorliegenden Offenbarung.

I. Fördersystem (7) für Fördergüter (1), insbesondere für Pack- und Paketstücke, umfassend:

mindestens eine Fördervorrichtung (6), die mindestens ein Clustermodul (5) enthält; und
mindestens eine mit der Fördervorrichtung (6) verbundene Steuerungseinheit (2),
wobei das Fördersystem (7) ein übergeordnetes Leitsystem (20) aufweist, das mit der mindestens einen Steuerungseinheit (2) steuerungstechnisch verbunden ist, so dass eine Anpassung der Lage eines Förderguts (1) und/oder Beabstandung zwischen benachbarten Fördergütern (1) aufgrund von Steuerbefehlen des Leitsystems (20) erfolgt.

II. Fördersystem (7) nach Aspekt I, dadurch gekennzeichnet, dass die mindestens eine Steuerungseinheit (2) mit mindestens einer Rechnereinheit (13) koppelbar ist, wobei die mindestens eine Rechnereinheit (13) Steuerbefehle vom Leitsystem (20) erhält.

III. Fördersystem (7) nach Aspekt I oder II, dadurch gekennzeichnet, dass die mindestens eine Rechnereinheit (13) dazu ausgebildet ist, die Lage eines Förderguts (1) und/oder Beabstandung zwischen benachbarten Fördergütern (1) auf der Grundlage der Abmessungen und/oder eines Inhalts eines Transportelements (4, 81) optimiert zu bestimmen.

IV. Fördersystem (7) nach einem der vorherigen Aspekte, dadurch gekennzeichnet, dass die Anpassung der Lage und/oder Beabstandung der Fördergüter (1) durch die mindestens eine Steuerungseinheit (2) erfolgt.

V. Fördersystem (7) nach einem der vorherigen Aspekte, dadurch gekennzeichnet, dass die Anpassung der Lage und/oder Beabstandung der Fördergüter (1) ohne Steuerbefehle der Steuerungseinheit (2) erfolgt.

VI. Fördersystem (7) nach einem der vorherigen Aspekte, dadurch gekennzeichnet, dass die Steuerungseinheit (2) unabhängig vom Leitsystem (20) steuert.

VII. Fördersystem (7) nach einem der vorherigen Aspekte, dadurch gekennzeichnet, dass die mindestens eine Fördervorrichtung (6) mehrere Clustermodule (5) enthält.

VIII. Fördersystem (7) nach einem der vorherigen Aspekte, dadurch gekennzeichnet, dass das mindestens eine Clustermodul (5) eine Clustereinheit (3, 70, 80) umfasst.

IX. Fördersystem (7) nach Aspekt VIII, dadurch gekennzeichnet, dass die Clustereinheit (3, 70, 80) eine Kugel 80 umfasst, die antriebbar oder antriebslos ausgestaltet ist.

X. Fördersystem (7) nach einem der Aspekte VIII und IX, dadurch gekennzeichnet, dass die Clustereinheit (3, 70) eine Rolle (72) oder ein Allseitenrad umfasst, die/das antriebbar oder antriebslos ausgestaltet ist.

XI. Fördersystem (7) nach einem der Aspekte VIII bis X, dadurch gekennzeichnet, dass die Clustereinheit (3, 70, 80) individuell in Abhängigkeit von benachbarten Clustereinheiten (3, 70, 80) steuerbar ist und/oder mittels Steuerungseinheit (2) auf Basis von Messungen und/oder Dateneinlesung Steuerbefehle erhält, um die Lage eines Förderguts (1) und/oder Beabstandung zwischen benachbarten Fördergütern (1) anzupassen.

XII. Fördersystem (7) nach einem der Aspekte VIII bis XI, dadurch gekennzeichnet, dass die Clustereinheit (3, 70, 80) eine Oberflächenbeschichtung aufweist, die bevorzugt gummiert ausgeführt ist.

XIII. Fördersystem (7) nach einem der Aspekte 8 bis 12, dadurch gekennzeichnet, dass das mindestens eine Clustermodul (5) eine Vielzahl von Clustereinheiten (3, 70, 80) enthält und jede dieser Clustereinheiten (3, 70, 80) individuell steuerbar von der mindestens einen Steuerungseinheit (2) ist.

XIV. Fördersystem (7) nach einem der vorherigen Aspekte, dadurch gekennzeichnet, dass jedes der Clustermodule (5) als ein Kugel- (5a) oder ein Rollen- (5b) oder Allseitenradclustermodul (5c) ausgeführt ist.

XV. Fördersystem (7) nach einem der vorherigen Aspekte, dadurch gekennzeichnet, dass an der mindestens einen Fördervorrichtung (6) mindestens eine Zuführstation (15) und mindestens eine Übergabestation (17) angeordnet sind.

XVI. Fördersystem (7) nach einem der vorherigen Aspekte dadurch gekennzeichnet, dass an der mindestens einen Fördervorrichtung (6) mindestens eine Staustation (9) angeordnet ist.

XVII. Fördersystem (7) nach einem der vorherigen Aspekte dadurch gekennzeichnet, dass das Fördersystem (7) eine Markierungsvorrichtung (14) umfasst.

XVIII. Fördersystem (7) nach Aspekt XVII, dadurch gekennzeichnet, dass die Markierungsvorrichtung (14) mindestens ein Fördergut (1) mit einem Identifikationsmittel (11) und/oder einem Ausrichtungscode (16) bezeichnet.

XIX. Fördersystem (7) nach einem der Aspekte XVII und XVIII, dadurch gekennzeichnet, dass das Identifikationsmittel (11) der Ausrichtungscode (16) ist.

XX. Fördersystem (7) nach einem der vorherigen Aspekte XVII bis XVIII, dadurch gekennzeichnet, dass eine Ausrichtung des Förderguts (1) als die Ausrichtung einer Aussenhülle des Förderguts (1) und/oder Ausrichtung des Ausrichtungscodes (16) erfassbar ist.

XXI. Fördersystem (7) nach einem der vorherigen Aspekte XVII bis XX, dadurch gekennzeichnet, dass eine Position des Förderguts (1) als die Position einer Aussenhülle des Förderguts (1) und/oder Position des Ausrichtungscodes (16) erfassbar ist.

XXII. Fördersystem (7) nach einem der vorherigen Aspekte, dadurch gekennzeichnet, dass das Fördersystem (7) mindestens eine Sensoreinheit (8) umfasst, die ausgelegt ist, die Lage und/oder Position mindestens eines Förderguts (1) zu erfassen.

XXIII. Fördersystem (7) nach Aspekt XXII, dadurch gekennzeichnet, dass die Sensoreinheit (8) einen optischen Sensor umfasst.

XXIV. Verfahren zur Förderung und Anpassung der Lage und/oder Beabstandung von Fördergütern (1), insbesondere von Pack- und Paketstücken, bevorzugt mit mindestens einem Fördersystem (7) nach einem oder mehreren der Aspekte I bis XXIII, umfassend mindestens die Verfahrensschritte:

Erfassen einer Lage und/oder Position eines Förderguts (1);
Bestimmen der Ausrichtung und/oder der Beabstandung zwischen benachbarten Fördergütern (1) durch eine Rechnereinheit (13);
Anpassung der Ausrichtung und/oder der Beabstandung zwischen benachbarten Fördergütern (1) durch mindestens ein von der Steuerungseinheit (2) gesteuertes Clustermodul (5) mit mindestens einer Clustereinheit (3, 70, 80); und
Beladung eines Transportelements (4, 81) mit dem Fördergut (1).

XXV. Verfahren nach Aspekt XXIV, dadurch gekennzeichnet, dass die mit mindestens eine Clustereinheit (3, 70, 80) um mindestens eine ihrer Achsen mittels eines Antriebs (84) gedreht wird.

XXVI. Verfahren nach Aspekt XXIV oder XXV, dadurch gekennzeichnet, dass die mindestens eine Clustereinheit (3, 70, 80) mit weiteren Clustereinheiten (3, 70, 80) kommuniziert.

XXVII. Verfahren nach einem der Aspekte XXIV bis XXVI, dadurch gekennzeichnet, dass ein Identifikationsmittel (11) des Förderguts (1, 10) und ein Datenelement (83) des Transportelements (4, 81) verknüpft werden.

Die vorliegende Erfindung offenbart ein Fördersystem zur Förderung und Anpassung der Lage sowie Beabstandung von Fördergütern. Es versteht sich von selbst, dass für einen Fachmann zahlreiche weitere Ausführungsformen anhand der exemplarisch beschriebenen Ausführungsbeispiele denkbar sind.

**Patentansprüche**

1. Fördersystem (7) für Fördergüter (1), insbesondere für Pack- und Paketstücke, umfassend:

   - mindestens eine Fördervorrichtung (6), die mindestens ein Clustermodul (5) enthält; und
   - mindestens eine mit der Fördervorrichtung (6) verbundene Steuerungseinheit (2),

   **dadurch gekennzeichnet, dass** das Fördersystem (7) ein übergeordnetes Leitsystem (20) aufweist, das mit der mindestens einen Steuerungseinheit (2) steuerungstechnisch verbunden ist, so dass eine Anpassung der Lage eines Förderguts (1) und/oder Beabstandung zwischen benachbarten Fördergütern (1) aufgrund von Steuerbefehlen des Leitsystems (20) erfolgt.

2. Fördersystem (7) nach Anspruch 1, **dadurch gekennzeichnet, dass** die mindestens eine Steuerungseinheit (2) mit mindestens einer Rechnereinheit (13) koppelbar ist, wobei die mindestens eine Rechnereinheit (13) Steuerbefehle vom Leitsystem (20) erhält.

3. Fördersystem (7) nach Anspruch 1 oder 2, **dadurch gekennzeichnet, dass** die mindestens eine Rechnereinheit (13) dazu ausgebildet ist, die Lage eines Förderguts (1) und/oder Beabstandung zwischen benachbarten Fördergütern (1) auf der Grundlage der Abmessungen und/oder eines Inhalts eines Transportelements (4, 81) optimiert zu bestimmen.

4. Fördersystem (7) nach einem der vorherigen Ansprüche, **dadurch gekennzeichnet, dass** die Anpassung der Lage und/oder Beabstandung der Fördergüter (1) durch die mindestens eine Steuerungseinheit (2) erfolgt.

5. Fördersystem (7) nach einem der vorherigen Ansprüche, **dadurch gekennzeichnet, dass** die mindestens eine Fördervorrichtung (6) mehrere Clustermodule (5) enthält.

6. Fördersystem (7) nach einem der vorherigen Ansprüche, **dadurch gekennzeichnet, dass** das mindestens eine Clustermodul (5) eine Clustereinheit (3, 70, 80) umfasst.

7. Fördersystem (7) nach Anspruch 6, **dadurch gekennzeichnet, dass** die Clustereinheit (3, 70, 80) eine Kugel 80 umfasst, die antreibbar oder antriebslos ausgestaltet ist.

8. Fördersystem (7) nach einem der Ansprüche 6 oder 7, **dadurch gekennzeichnet, dass** die Clustereinheit (3, 70) eine Rolle (72) oder ein Allseitenrad umfasst, die/das antreibbar oder antriebslos ausgestaltet ist.

9. Fördersystem (7) nach einem der Ansprüche 6 bis 8, **dadurch gekennzeichnet, dass** die Clustereinheit (3, 70, 80) individuell in Abhängigkeit von benachbarten Clustereinheiten (3, 70, 80) steuerbar ist und/oder mittels Steuerungseinheit (2) auf Basis von Messungen und/oder Dateneinlesung Steuerbefehle erhält, um die Lage eines Förderguts (1) und/oder Beabstandung zwischen benachbarten Fördergütern (1) anzupassen.

10. Fördersystem (7) nach einem der Ansprüche 6 bis 9, **dadurch gekennzeichnet, dass** das mindestens eine Clustermodul (5) eine Vielzahl von Clustereinheiten (3, 70, 80) enthält und jede dieser Clustereinheiten (3, 70, 80) individuell steuerbar von der mindestens einen Steuerungseinheit (2) ist.

11. Fördersystem (7) nach einem der vorherigen Ansprüche, **dadurch gekennzeichnet, dass** jedes der Clustermodule (5) als ein Kugel- (5a) oder ein Rollen- (5b) oder Allseitenradclustermodul (5c) ausgeführt ist.

12. Fördersystem (7) nach einem der vorherigen Ansprüche **dadurch gekennzeichnet, dass** das Fördersystem (7) eine Markierungsvorrichtung (14) umfasst, wobei die Markierungsvorrichtung (14) mindestens ein Fördergut (1) mit einem Identifikationsmittel (11) und/oder einem Ausrichtungscode (16) bezeichnet.

13. Fördersystem (7) nach Anspruch 12, **dadurch gekennzeichnet, dass** das Identifikationsmittel (11) der Ausrichtungscode (16) ist.

14. Fördersystem (7) nach Anspruch 12 oder 13, **dadurch gekennzeichnet, dass** eine Ausrichtung des Förderguts (1) als die Ausrichtung einer Aussenhülle des Förderguts (1) und/oder Ausrichtung des Ausrichtungscodes (16) erfassbar ist, und/oder eine Position des Förderguts (1) als die Position einer Aussenhülle des Förderguts (1) und/oder Position des Ausrichtungscodes (16) erfassbar ist.

15. Verfahren zur Förderung und Anpassung der Lage und/oder Beabstandung von Fördergütern (1), insbesondere von Pack- und Paketstücken, bevorzugt mit mindestens einem Fördersystem (7) nach einem oder mehreren der Ansprüche 1 bis 14, umfassend mindestens die Verfahrensschritte:

    - Erfassen einer Lage und/oder Position eines Förderguts (1);
    - Bestimmen der Ausrichtung und/oder der Beabstandung zwischen benachbarten Fördergütern (1) durch eine Rechnereinheit (13);

- Anpassung der Ausrichtung und/oder der Beabstandung zwischen benachbarten Fördergütern (1) durch mindestens ein von der Steuerungseinheit (2) gesteuertes Clustermodul (5) mit mindestens einer Clustereinheit (3, 70, 80); und

- Beladung eines Transportelements (4, 81) mit dem Fördergut (1).

Fig. 1a

Fig. 1b

**Fig. 2**

**Fig. 3a**

**Fig. 3b**

**Fig. 4a**

**Fig. 4b**

**Fig. 4c**

Fig. 5a

Fig. 5b

Fig. 5c

Fig. 5d

Fig. 6a

Fig. 6b

Fig. 6c

**Fig. 7a**

**Fig. 7b**

**Fig. 7c**

**Fig. 7d**

**Fig. 7e**

**Fig. 7f**

Fig. 8a

Fig. 8b

Fig. 8c

## Fig. 9a

## Fig. 9b

**Fig. 10a**

**Fig. 10b**

**Fig. 10c**

Fig. 11a

Fig. 11b

Fig. 12

**Fig. 13**

EP 4 299 478 A1

**EUROPÄISCHER RECHERCHENBERICHT**

Nummer der Anmeldung

EP 23 18 2127

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 357 839 A1 (SIEMENS AG [DE]) 8. August 2018 (2018-08-08) * Absätze [0023] - [0044] * * Abbildungen 1-9 * | 1-15 | INV. B65G13/10 B65G43/00 B65G43/08 |
| X | DE 10 2019 135620 A1 (INTERROLL HOLDING AG [CH]) 24. Juni 2021 (2021-06-24) * Absätze [0003] - [0072] * * Abbildungen 1-3 * | 1-15 | ADD. B65G47/22 B65G47/244 B65G47/28 B65G47/54 B65G47/61 |
| X | DE 10 2010 015584 A1 (SSI SCHAEFER NOELL GMBH [DE]) 20. Oktober 2011 (2011-10-20) * Absätze [0020] - [0086] * * Abbildungen 1-10 * | 1-15 | |
| X | EP 1 510 479 A1 (SIEMENS AG [DE]) 2. März 2005 (2005-03-02) * Absätze [0027] - [0029] * * Abbildung 1 * | 1-15 | |
| X | WO 2014/177361 A1 (SIEMENS AG [DE]) 6. November 2014 (2014-11-06) * Seite 5, Zeile 17 - Seite 6, Zeile 16 * * Abbildung 1 * | 1-15 | RECHERCHIERTE SACHGEBIETE (IPC) B65G B64F |
| A | US 7 050 938 B1 (PRATER ALEXANDER C [US] ET AL) 23. Mai 2006 (2006-05-23) * Abbildungen 1-6 * | 12 | |
| A | EP 0 582 963 A1 (SIEMENS AG [DE]) 16. Februar 1994 (1994-02-16) * Spalte 2, Zeilen 20-52 * * Abbildung 1 * | 12 | |

-/--

Der vorliegende Recherchenbericht wurde für alle Patentansprüche erstellt

| Recherchenort | Abschlußdatum der Recherche | Prüfer |
|---|---|---|
| Den Haag | 13. Oktober 2023 | Thenert, Alexander |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

Seite 1 von 2

**Europäisches Patentamt**
**European Patent Office**
**Office européen des brevets**

# EUROPÄISCHER RECHERCHENBERICHT

**Nummer der Anmeldung**

EP 23 18 2127

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2011 104900 A1 (GOETZE ROBERT [DE]; GROZ SEBASTIAN [DE] ET AL.) 20. Dezember 2012 (2012-12-20) * Absätze [0033], [0036] * * Abbildung 1 * ----- | 12 | |
| A | US 2013/166062 A1 (CASEY JACKIE W [US] ET AL) 27. Juni 2013 (2013-06-27) * Absätze [0063], [0064], [0091] * * Abbildungen 1-8 * ----- | 12 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 13. Oktober 2023 | Thenert, Alexander |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 18 2127

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-10-2023

| Im Recherchenbericht angeführtes Patentdokument | Datum der Veröffentlichung | Mitglied(er) der Patentfamilie | Datum der Veröffentlichung |
|---|---|---|---|
| EP 3357839 A1 | 08-08-2018 | EP 3357839 A1 | 08-08-2018 |
| | | WO 2018141462 A1 | 09-08-2018 |
| DE 102019135620 A1 | 24-06-2021 | KEINE | |
| DE 102010015584 A1 | 20-10-2011 | DE 102010015584 A1 | 20-10-2011 |
| | | EP 2560898 A1 | 27-02-2013 |
| | | US 2013037388 A1 | 14-02-2013 |
| | | US 2013220775 A1 | 29-08-2013 |
| | | WO 2011131573 A1 | 27-10-2011 |
| EP 1510479 A1 | 02-03-2005 | AT E338712 T1 | 15-09-2006 |
| | | DE 10339951 A1 | 31-03-2005 |
| | | DK 1510479 T3 | 15-01-2007 |
| | | EP 1510479 A1 | 02-03-2005 |
| | | ES 2273155 T3 | 01-05-2007 |
| | | US 2005065642 A1 | 24-03-2005 |
| WO 2014177361 A1 | 06-11-2014 | CN 105143047 A | 09-12-2015 |
| | | EP 2991900 A1 | 09-03-2016 |
| | | KR 20150138278 A | 09-12-2015 |
| | | MY 177752 A | 23-09-2020 |
| | | SG 11201508825P A | 27-11-2015 |
| | | US 2016075449 A1 | 17-03-2016 |
| | | WO 2014177361 A1 | 06-11-2014 |
| US 7050938 B1 | 23-05-2006 | US 7050938 B1 | 23-05-2006 |
| | | US 7085677 B1 | 01-08-2006 |
| | | US 7313460 B1 | 25-12-2007 |
| | | US 7707008 B1 | 27-04-2010 |
| | | US 7751929 B1 | 06-07-2010 |
| EP 0582963 A1 | 16-02-1994 | AT E133634 T1 | 15-02-1996 |
| | | DE 9210809 U1 | 08-10-1992 |
| | | DK 0582963 T3 | 01-07-1996 |
| | | EP 0582963 A1 | 16-02-1994 |
| | | ES 2082564 T3 | 16-03-1996 |
| | | GR 3019082 T3 | 31-05-1996 |
| DE 102011104900 A1 | 20-12-2012 | KEINE | |
| US 2013166062 A1 | 27-06-2013 | CN 104010953 A | 27-08-2014 |
| | | EP 2794438 A1 | 29-10-2014 |
| | | JP 6096804 B2 | 15-03-2017 |
| | | JP 2015502896 A | 29-01-2015 |
| | | US 2013166062 A1 | 27-06-2013 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT
ÜBER DIE EUROPÄISCHE PATENTANMELDUNG NR.**

EP 23 18 2127

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-10-2023

| Im Recherchenbericht angeführtes Patentdokument | Datum der Veröffentlichung | Mitglied(er) der Patentfamilie | Datum der Veröffentlichung |
|---|---|---|---|
| | | WO 2013096498 A1 | 27-06-2013 |

Für nähere Einzelheiten zu diesem Anhang : siehe Amtsblatt des Europäischen Patentamts, Nr.12/82

EPO FORM P0461

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3910524 C2
- US 3254752 A
- WO 2015200460 A1
- DE 102021107088 A1
- CN 217550478 U
- EP 4079660 A1
- DE 102012014181 A1
- US 10569976 B2
- CH 0010302022
- CH 0007882022